(19) **Europäisches Patentamt**
**European Patent Office**
**Office européen des brevets**

(11) **EP 2 002 680 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **06830564.8**

(22) Anmeldetag: **12.12.2006**

(51) Int Cl.:
**H04W 64/00** (2009.01)

(86) Internationale Anmeldenummer:
**PCT/EP2006/069616**

(87) Internationale Veröffentlichungsnummer:
**WO 2007/118518 (25.10.2007 Gazette 2007/43)**

(54) **Verfahren und Vorrichtung zur Standortbestimmung eines mobilen Objekts**

Method and apparatus for determining the location of a mobile object

Procédé et dispositif pour la localisation d'un objet mobile

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.03.2006 EP 06006833**
**20.09.2006 DE 102006044293**

(43) Veröffentlichungstag der Anmeldung:
**17.12.2008 Patentblatt 2008/51**

(73) Patentinhaber: **Siemens Enterprise Communications GmbH & Co. KG**
**81379 München (DE)**

(72) Erfinder:
- **BAMBERGER, Joachim**
**82131 Stockdorf (DE)**
- **BETONI PARODI, Bruno**
**80337 München (DE)**
- **HORN, Joachim**
**22143 Hamburg (DE)**
- **LENZ, Henning**
**76137 Karlsruhe (DE)**
- **SZABO, Andrei**
**85521 Riemerling (DE)**

(74) Vertreter: **Fritzsche, Thomas et al**
**Fritzsche Patent**
**Naupliastrasse 110**
**81545 München (DE)**

(56) Entgegenhaltungen:
**US-A1- 2005 208 952    US-B1- 6 259 406**

- **KOHONEN T: "THE SELF-ORGANIZING MAP" PROCEEDINGS OF THE IEEE, IEEE. NEW YORK, US, Bd. 78, Nr. 9, 1. September 1990 (1990-09-01), Seiten 1464-1480, XP000165407 ISSN: 0018-9219**
- **GERD W LFLE ET AL: "Dominant Path Prediction Model for Indoor Scenarios" GERMAN MICROWAVE CONFERENCE, XX, XX, 2005, Seiten 176-179, XP007902485**
- **WOLFLE G ET AL: "Dominant paths for the field strength prediction" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, Bd. 1, 18. Mai 1998 (1998-05-18), Seiten 552-556, XP010287853 ISBN: 0-7803-4320-4**

**Beschreibung**

Die Erfindung betrifft ein Verfahren und eine Vorrichtung zur rechnergestützten Lokalisation eines mobilen Objekts.

Aus dem Stand der Technik sind verschiedene merkmalsbasierte Ortungsverfahren von mobilen Nutzern bzw. Endgeräten in drahtlosen Kommunikationsnetzen bekannt. Dabei werden als Merkmale z.B. die Feldstärken von Feldern durch das mobile Objekt gemessen, wobei die Felder in dem Kommunikationsnetz von einer Mehrzahl von Basisstationen erzeugt und ausgesendet werden. Als Kommunikationsnetze werden beispielsweise DECT-Netze (DECT = Digital Enhanced Cordless Telecommunications), WLAN-Netze (WLAN = Wireless Local Area Network) sowie die Mobilfunknetze GSM (GSM = Global System for Mobile Communication) und UMTS (UMTS = Universal Mobile Telecommunication System) eingesetzt.

Bei der merkmalsbasierten Ortung werden so genannte Referenzkarten verwendet, in denen für eine Vielzahl von Stützstellen eine Beziehung zwischen der räumlichen Position der Stützstelle und merkmalsabhängigen Größen der einzelnen Basisstationen hinterlegt ist. Merkmalsabhängige Größen sind beispielsweise in einem feldstärkebasierten Verfahren die Feldstärke des von einer Basisstation ausgesendeten Feldes an der räumlichen Position der Stützstelle oder die an der Basisstation gemessene Feldstärke eines Feldes; das von einem Objekt ausgesendet wird, welches sich an der räumlichen Position der Stützstelle befindet. Durch die Messung der Feldstärke an einer beliebigen Position und durch Vergleich des gemessenen Wertes mit den feldstärkeabhängigen Größen an den Stützstellen der Referenzkarte kann die Position des Objekts ermittelt werden. Bei dem aus dem Stand der Technik bekannten feldstärkebasierten Verfahren ist eine Kalibrierung bzw. Einmessung von Referenzmustern erforderlich, um eine ausreichende Genauigkeit in strukturierten Umgebungen zu erreichen. Diese Kalibrierung ist personal- und kostenintensiv und umso aufwändiger, je höher die gewünschte Genauigkeit ist.

Neben einer Kalibrierung mit Referenzmustern ist es aus dem Stand der Technik ferner bekannt, die Position der empfangsstärksten Basisstation in dem mobilen Objekt über einfache Trilaterationsmodelle zu ermitteln, beispielsweise unter der Annahme einer radialen Feldausbreitung. Bei solchen Verfahren werden wenige Parameter benötigt, welche über wenige Referenzmessungen angepasst werden können. Diese Verfahren haben jedoch den Nachteil, dass deren erreichte Genauigkeit deutlich geringer ist als bei Verfahren, bei denen eine Referenzkarte mit einer Vielzahl von Messungen erstellt wird.

Die Druckschrift US 6 259 406 B1 offenbart ein Verfahren und ein System zur Erkennung einer Position von mobilen Funkstationen über empirisch ermittelte Messdaten der Stützstellen.

Aufgabe der Erfindung ist es, ein einfaches Lokalisationsverfahren zu schaffen, welches eine hohe Genauigkeit aufweist und mit geringem Aufwand ohne die Durchführung einer Vielzahl von Referenzmessungen zu installieren ist.

Diese Aufgabe wird durch das Verfahren nach Patentanspruch 1 und durch die Vorrichtung nach Patentanspruch 25 gelöst. Weiterbildungen der Erfindung sind in den abhängigen Ansprüchen definiert.

In dem erfindungsgemäßen Verfahren werden mit Hilfe eines merkmalsbasierten Ortungsverfahrens die Merkmale von mehreren Basisstationen gemessen und hieraus unter Verwendung einer Referenzkarte die Position des Objekts geortet. Das Merkmal einer Basisstation ist hierbei ein Merkmal, welches mit einem Feld assoziiert ist, wobei das Feld ein von der Basisstation ausgesendetes Feld an der Position des Objekts oder ein von dem Objekt ausgesendetes Feld an der Basisstation ist. Durch das Feld wird somit eine Beziehung zwischen einer einzelnen Basisstation und der Position des Objekts im Raum geschaffen.

Bei dem Verfahren wird hierbei in einem ersten Schritt zur Initialisierung des Verfahrens eine Referenzkarte mit einem Wellenausbreitungsmodell berechnet, welche eine Vielzahl von Stützstellen umfasst, wobei eine Stützstelle jeweils durch eine Position und einen der Position zugeordneten merkmalsabhängigen Wert repräsentiert wird. Hier um im Folgenden wird unter merkmalsabhängigem Wert ein Wert verstanden, der von den zuvor beschriebenen Merkmalen der Basisstationen abhängt. Insbesondere kann der merkmalsabhängige Wert ein Merkmalsvektor sein, der die Merkmale aller Basisstationen umfasst. In einem feldstärkebasierten Verfahren ist der merkmalsabhängige Wert beispielsweise ein feldstärkeabhängiger Wert. Insbesondere kann der Wert in einem solchen Verfahren ein Feldstärkevektor sein, der die Feldstärken von jeder Basisstation als Einträge umfasst. Die Feldstärken der Basisstationen können hierbei die Feldstärken von von den Basisstationen ausgesendeten Feldern an der Objektposition sein. Sie können jedoch auch die Feldstärken von von dem Objekt ausgesendeten Feldern am Ort der einzelnen Basisstationen sein. Das erfindungsgemäße Verfahren ist nicht auf die Verwendung von feldstärkebasierten Ortungsverfahren beschränkt, es können insbesondere als Ortungsverfahren auch laufzeitbasierte bzw. winkelbasierte Ortungsverfahren eingesetzt werden. Bei laufzeitbasierten Ortungsverfahren wird die Position eines Objekts über die Laufzeit eines Feldes ermittelt. Bei winkelbasierten Ortungsverfahren wird die Position eines Objekts über die räumlichen Winkel bestimmt, in welchen ein Feld auf ein Objekt bzw. eine Basisstation trifft.

Nach der Initialisierung wird im Betrieb eine Mehrzahl von Ortungen durchgeführt, mit denen jeweils ein gemessener merkmalsabhängiger Wert und hieraus eine geortete Position des Objekts über das merkmalsbasierte Ortungsverfahren unter Verwendung der vorgegebenen mit dem Wellenausbreitungsmodell berechneten Referenzkarte ermittelt werden. Dabei werden für zumindest einen Teil der Ortungen jeweils eine oder mehrere Aktualisierungen der vorgegebenen mit dem Wellenausbreitungsmodell berechneten Referenzkarte durchgeführt, bei welchen die merkmalsabhängigen Werte an den Stützstellen der Referenzkarte in einer vorbestimmten Umgebung um eine Objektposition mit einem Korrekturterm korrigiert werden, wobei der Korrekturterm von der Differenz zwischen dem gemessenen merkmalsabhängigen Wert der jeweiligen Ortung und dem merkmalsabhängigen Wert an einer Stützstelle in der vorbestimmten Umgebung abhängt. Die vorbestimmte Umgebung kann hierbei je nach Anforderungen beliebig gewählt werden und insbesondere auch das gesamte Gebiet der Referenzkarte umfassen.

Die Objektposition, um welche die vorbestimmte Umgebung angeordnet ist, kann hierbei beispielsweise eine vorbekannte Position sein, das heißt es ist in dem Verfahren bekannt, an welcher Stelle sich das Objekt befindet, wenn eine entsprechende Ortung durchgeführt wird. In diesem Fall dient das erfindungsgemäße Verfahren zur hochgenauen Kalibrierung einer Referenzkarte, ohne dass das Verfahren zur Ortung von unbekannten Positionen genutzt wird. Die Objektposition kann jedoch auch eine unbekannte Position sein, welche die durch die jeweilige Ortung ermittelte geortete Position ist. In diesem Fall wird bei der Durchführung des Verfahrens eine Ortung und simultan eine Kalibrierung und damit Verbesserung der Ortungsgenauigkeit durchgeführt. Die Aktualisierung der Referenzkarte gemäß dem erfindungsgemäßen Verfahrens kann hierbei immer zum Zeitpunkt der jeweiligen Ortung durchgeführt werden, es besteht jedoch auch die Möglichkeit, dass der Schritt erst nach Ablauf einer vorbestimmten Anzahl von Ortungen durchgeführt wird, wobei dann vorzugsweise alle Objektpositionen bis zur vorhergehenden Ortung mit einem Korrekturterm korrigiert werden.

Die bei der Initialisierung des Verfahrens vorgegebene Referenzkarte wird erfindungsgemäß mit einem Wellenausbreitungsmodell berechnet. Als Wellenausbreitungsmodell kann beispielsweise ein radiales Ausbreitungsmodell, ein MWM-Ausbreitungsmodell (MWM = Multi Wall Model) oder ein DPM-Ausbreitungsmodell (DPM = Dominant Path Model) eingesetzt werden. Diese Ausbreitungsmodelle werden noch näher in der detaillierten Beschreibung erläutert. Durch die Verwendung solcher Wellenausbreitungsmodelle kann einfach und schnell bei der Initialisierung des Verfahrens eine Referenzkarte vorgegeben werden, ohne dass aufwändige Referenzmessungen an einer Vielzahl von Positionen durchgeführt werden müssen. Es reicht insbesondere aus, dass die Parameter des Ausbreitungsmodells durch eine einfache Selbstvermessung der Basisstationen ermittelt werden.

In einer bevorzugten Ausführungsform wird die Mehrzahl von Ortungen jeweils mit Hilfe eines Fingerprinting-Verfahrens durchgeführt. Das Fingerprinting-Verfahren ist hinlänglich aus dem Stand der Technik bekannt und wird noch näher in der detaillierten Beschreibung erläutert. Gegebenenfalls können jedoch auch andere Verfahren zur Ortung eingesetzt werden, beispielsweise Verfahren, welche eine wahrscheinlichkeitstheoretische Kostenfunktion auf der Basis der für den Korrekturterm ermittelten Differenzen einsetzen, um hiermit die geortete Position zu ermitteln.

In einer besonders bevorzugten Ausführungsform der Erfindung nimmt die Größe des Korrekturterms mit zunehmendem Abstand von der Objektposition betragsmäßig ab, wodurch der Tatsache Rechnung getragen wird, dass der Fehler gemäß dem Korrekturterm nur lokal Einfluss auf den merkmalsabhängigen Wert hat.

In einer besonders bevorzugten Ausführungsform der Erfindung hängt der Korrekturterm von einer Gaußfunktion mit Zentrum in der Objektposition ab. Ferner hängt auch die vorbestimmte Umgebung um die Objektposition von einem Parameter der Gaußfunktion ab, nämlich von der Standardabweichung der Gaußfunktion. Die vorbestimmte Umgebung ist hierbei vorzugsweise durch einen Umkreis um das Zentrum der Gaußfunktion mit einem Radius gegeben, welcher größer oder gleich der Standardabweichung und insbesondere ein Vielfaches, vorzugsweise das Dreifache, der Standardabweichung ist. Die Werte der Gaußfunktion außerhalb dieses Umkreises sind derart klein, dass sie vernachlässigt werden können. Dadurch, dass nur noch bestimmte Stützstellen in der Umgebung um die Objektposition berücksichtigt werden, benötigt das Verfahren weniger Rechenzeit.

Vorzugsweise ist die Standardabweichung der Gaußfunktion derart gewählt, dass sie von dem Abstand der Stützstellen der Referenzkarte abhängt und insbesondere zwischen dem Stützstellenabstand und einem Fünffachen des Stützstellenabstands liegt. Um die Rechenzeit des Verfahrens zu reduzieren, wird in einer weiteren bevorzugten Variante der Erfindung die Gaußfunktion durch eine Funktion approximiert, welche mit zunehmenden Abstand vom Zentrum auf Null abfällt und insbesondere bei einem Wert größer oder gleich der Standardabweichung, vorzugsweise bei einem Dreifachen der Standardabweichung, Null ist. Eine derartige Funktion ist beispielsweise in der detaillierten Beschreibung in Gleichung (10) genannt.

In einer besonders bevorzugten Ausführungsform der Erfindung ist der gemessene merkmalsabhängige Wert ein am Objekt oder an den Basisstationen gemessener Merkmalsvektor, insbesondere ein Feldstärkevektor, zum Zeitpunkt der Ortung und die vorgegebene Referenzkarte ist eine Orts-Merkmalskarte, bei welcher die merkmalsabhängigen Werte Merkmalsvektoren für die Positionen der Stützstellen sind, wobei ein Merkmalsvektor als Einträge die Merkmale der Basisstationen für die entsprechende Position umfasst. Ggf. kann der merkmalsabhängige Wert auch eine Distanz sein, so dass die Referenzkarte eine Orts-Distanzkarte darstellt. Hierbei wird beispielsweise ein Wellenausbreitungsmodell genutzt, um von Feldstärkewerten auf dominante Distanzen zu schließen, welche in der Orts-Distanzkarte hinterlegt sind. In diesem Fall kann die Ortung über eine Trilaterationsrechnung bzw. eine Multilaterationsrechnung bei mehr als drei Basisstationen durchgeführt werden.

In einer besonders bevorzugten Ausführungsform der Erfindung ist der Korrekturterm $S_{UPD}$ für eine Stützstelle k innerhalb der vorbestimmten Umgebung durch folgende Funktion gegeben bzw. hängt von folgender Funktion ab:

$$S_{UPD} = {}^{k}\Delta p \cdot f(r)$$

wobei f(r) eine wie folgt definierte Gaußfunktion ist:

$$f(r) = \kappa \cdot e^{-\frac{1}{2}\left(\frac{r}{\sigma}\right)^2},$$

wobei $\sigma$ die Standardabweichung und r der Abstand von der Objektposition ist und $\kappa$ vorzugsweise ein Wert kleiner als 1 und besonders bevorzugt kleiner oder gleich 0,5 ist,
wobei ${}^{k}\Delta p$ ein Differenzmerkmalsvektor mit jeweils einem Eintrag für das Merkmal einer Basisstation von N Basisstationen ist,
wobei der Differenzmerkmalsvektor ${}^{k}\Delta p$ entweder definiert ist als:

$${}^{k}\Delta p \;=\; {}^{c}p \;-\; {}^{c}p_{RM},$$

wobei ${}^{c}p$ der gemessene Merkmalsvektor zum Zeitpunkt der Ortung ist und ${}^{c}PRM$ ein mit der Orts-Merkmalskarte (RM) bestimmter Merkmalsvektor an der georteten Position ist,
oder definiert ist als:

$${}^{k}\Delta p \;=\; {}^{c}p \;-\; {}^{k}p_{RM},$$

wobei ${}^{c}p$ der gemessene Merkmalsvektor zum Zeitpunkt der Ortung und ${}^{k}PRM$ der Merkmalsvektor an der Stützstelle k der Orts-Merkmalskarte ist.
Gemäß den genannten Alternativen zur Berechnung von ${}^{k}\Delta p$ wird als Wert für ${}^{k}\Delta p$ entweder ein Vektor verwendet, der unabhängig von der Stützstelle ist, die korrigiert wird, oder es wird ein Wert verwendet, in dem der Wert des Merkmals an der betrachteten Stützstelle gemäß der Orts-Merkmalskarte einfließt. Die soeben definierte Variante des Verfahrens wird beispielsweise zur Durchführung eines so genannten unüberwachten Lernens eingesetzt, bei dem zum Zeitpunkt der jeweiligen Ortung nicht bekannt ist, an welcher Stelle sich das Objekt befindet. Dies bedeutet, dass als Objektposition die durch die jeweilige Ortung ermittelte geortete Position des Objekts verwendet wird. Es ist jedoch auch möglich, dass der Weg des mobilen Objekts vorgegeben ist und die Objektposition zum Zeitpunkt der jeweiligen Ortung vorbekannt ist. Vorzugsweise bewegt sich das Objekt dabei auf einem oder mehreren vorbestimmten Wegabschnitten zwischen jeweils zwei Basisstationen, wobei auf dem jeweiligen Wegabschnitt Q Objektpositionen vorbekannt sind und an diesen Objektpositionen jeweils eine Ortung durchgeführt wird. Vorzugsweise ist der Korrekturterm $S_{UPD}$ (r, q) dabei an der Objektposition q (q = 1, ..., Q) aus den Q Objektpositionen auf einem Wegabschnitt wie folgt definiert:

$$S_{UPD}(r,q) = \kappa \; {}^{q}\Delta p \; \frac{e^{-\frac{1}{2}\left(\frac{{}^{q}r}{\sigma}\right)^2}}{\sum_{g=1}^{Q} e^{-\frac{1}{2}\left(\frac{{}^{s}r}{\sigma}\right)^2} + \zeta}$$

wobei $\sigma$ die Standardabweichung und ${}^{q}r$ der Abstand von der Objektposition q und ${}^{g}r$ der Abstand von der Objektposition g ist und wobei κ vorzugsweise ein Wert kleiner oder gleich 0,5 ist,
wobei ζ ein positiver Term ist, der sicherstellt, dass der Nenner nicht Null wird, wobei ζ vorzugsweise kleiner als 1 ist und insbesondere 0,3 beträgt,
wobei $^q\Delta p$ ein Differenzmerkmalsvektor mit jeweils einem Eintrag für das Merkmal einer Basisstation von N Basisstationen ist,
wobei der Differenzfeldstärkevektor $^q\Delta p$ definiert ist als:

$$^q\Delta p = {}^{cq}p - {}^{cq}p_{RM} \, ,$$

wobei $^{cq}p$ der gemessene Merkmalsvektor zum Zeitpunkt der Ortung an der Objektposition q ist und $^{cq}P_{RM}$ ein mit der Orts-Merkmalskarte (RM) ermittelter Merkmalsvektor an der georteten Position ist.

Gemäß dieser Variante wird die Aktualisierung der Orts-Merkmalskarte immer nach Durchlaufen eines vorbestimmten Wegabschnitts durchgeführt, wobei bei der Aktualisierung die Summe aller Gaußfunktionen an den Positionen des Wegabschnitts berücksichtigt wird. Bei dieser Variante des Verfahrens handelt es sich um ein überwachtes Lernverfahren, da die Objektpositionen beim Lernverfahren vorbekannt sind.

In einer bevorzugten Variante des soeben genannten Verfahrens ist der Abstand zwischen aufeinander folgenden Objektpositionen konstant und die Standardabweichung hängt von diesem konstanten Abstand ab und ist insbesondere direkt proportional zu dem konstanten Abstand.

In einer besonders bevorzugten Variante des überwachten Lernverfahrens läuft das mobile Objekt eine Sequenz von vorbestimmten Wegabschnitten ab, wobei die Reihenfolge der abgelaufenen Wegabschnitte mit Hilfe einer Kostenfunktion geeignet ermittelt wird. Die Kostenfunktion gibt hierbei vorzugsweise für einen jeweiligen Wegabschnitt an, wie groß der maximale Abstand einer Objektposition auf dem Wegabschnitt zur nächstgelegenen Basisstation oder zu einer bereits durchlaufenen nächstgelegenen Objektposition ist. Mit einer solchen Kostenfunktion wird erreicht, dass möglichst schnell ein großes Areal von Objektpositionen durch das Verfahren abgedeckt wird.

In dem erfindungsgemäßen Verfahren kann das merkmalsbasierten Ortungsverfahren ein feldstärkebasiertes und/oder laufzeitbasiertes und/oder winkelbasiertes Ortungsverfahren umfassen. Vorzugsweise berücksichtigt das laufzeitbasierte Ortungsverfahren dabei nur solche Felder, welche eine Mindestsignalstärke am Objekt aufweisen.

Das merkmalsbasierte Ortungsverfahren kann beliebige Felder verwenden, insbesondere Felder eines DECT- und/oder WLAN- und/oder Mobilfunk-Netzes.

Neben dem soeben beschriebenen erfindungsgemäßen Verfahren betrifft die Erfindung ferner eine Vorrichtung zur rechnergestützten Ortung eines mobilen Objekts mit Hilfe eines merkmalsbasierten Ortungsverfahrens, mit dem die Merkmale von mehreren Basisstationen gemessen werden und hieraus unter Verwendung einer Referenzkarte die Position des Objekts geortet wird, wobei die Vorrichtung umfasst: wenigstens eine Antenne zum Empfang der Felder der Basisstationen und/oder zum Aussenden von Feldern zum Empfang durch die Basisstationen sowie eine Auswerteeinheit zum Auswerten der gemessenen Merkmale der Basisstationen. Die Auswerteeinheit ist dabei derart ausgestaltet, dass mit ihr das oben beschriebene erfindungsgemäße Verfahren durchführbar ist.

Ausführungsbeispiele der Erfindung werden nachfolgend anhand der beigefügten Figuren detailliert beschrieben.

Es zeigen:

Fig. 1          eine schematische Darstellung der gemäß der Erfin- dung verwendbaren Ausbreitungsmodelle;

Fig. 2          eine Darstellung einer ersten Gebäudeumgebung, in der das erfindungsgemäße Verfahren getestet wurde;

Fig. 3 bis Fig. 5          Diagramme, welche die Ergebnisse der Tests des erfindungsgemäßen Verfahrens in der ers- ten Gebäudeumgebung zeigen;

Fig. 6          eine zweite Gebäudeumgebung, in der das erfindungs- gemäße Verfahren getestet wurde; und

Fig. 7 bis Fig. 9          Diagramme, welche die Ergebnisse der Tests des erfindungsgemäßen Verfahrens in der zwei- ten Gebäudeumgebung zeigen.

In den nachfolgend beschriebenen Ausführungsformen des erfindungsgemäßen Verfahrens wird ein mobiles Objekt betrachtet, welches über wenigstens eine Antenne verfügt, mit der die Feldstärken von mehreren Basisstationen in der Umgebung des Objekts empfangen und gemessen werden können. Jede Basisstation sendet hierbei drahtlos Signale mit einer bestimmten Leistung (d.h. mit einem bestimmten Feldstärkewert) aus. Diese drahtlos übermittelten Signale verteilen sich im Raum, wobei sie reflektiert, gebeugt und absorbiert werden, und zwar durch Personen und andere Objekte im Raum, wie z. B. Wände, Maschinen oder Büromöbel in der Umgebung.

In den hier beschriebenen Ausführungsformen des erfindungsgemäßen Verfahrens wird das Propagationsprofil für jede Basisstation in der Form einer zwei- oder dreidimensionalen Karte beschrieben, wobei jede Position in der Karte eindeutig mit einem empfangenen Feldstärkewert für jede Basisstation verknüpft ist. Der empfangene Feldstärkewert wird im Folgenden auch als RSS-Wert (RSS = Received Signal Strength) bezeichnet. Eine derartige Karte verknüpft somit Positionskoordinaten mit RSS-Werten von Basisstationen und die Verwendung von solchen Karten, welche auch als "Radio Maps" bezeichnet werden, ist aus dem Stand der Technik bekannt. Im Folgenden werden solche Karten als Orts-Feldstärkekarten (abgekürzt RM) bezeichnet und sie entsprechen in der hier beschriebenen speziellen Variante des erfindungsgemäßen Verfahrens den in den Ansprüchen definierten Referenzkarten. Die Karte beschreibt eine Oberfläche in einem kontinuierlichen Raum und kann entweder eine kontinuierliche Repräsentation von z. B. einem Satz von Funktionen sein oder eine diskrete Repräsentation als eine Matrix von aufgezeichneten Werten, welche aus der kontinuierlichen Karte entnommen wurden.

Im Folgenden wird eine Orts-Feldstärkekarte verwendet, welche eine diskrete Repräsentation von Feldstärkewerten an unterschiedlichen Positionen bzw. Stützstellen im Raum darstellt.

Die Orts-Feldstärkekarte RM ist für K Stützstellen definiert, wobei ein Satz von allen Stützstellen $POS_{RM}$ im Raum definiert ist durch folgende Matrix:

$$POS_{RM} = [^1pos_{RM} \ ^2pos_{RM} \ ... \ ^Kpos_{RM}]^T, \qquad (1)$$

wobei jeder einzelne Term $^kpOS_{RM} = [^kx_{RM} \ ^ky_{RM}]$ die k-te zweidimensionale Position dieses Satzes an Stützstellen ist.

Im Folgenden wird, eine Umgebung mit N Basisstationen BS betrachtet, wobei die Orts-Feldstärkekarte RM als ein Satz von K Vektoren von RSS-Werten dargestellt werden kann und wobei jeder dieser Vektoren die Dimension N für die Feldstärken der N Basisstationen aufweist. Auf diese Weise ergibt sich eine Matrixdarstellung für die Orts-Feldstärkekarte RM, welche wie folgt lautet:

$$RM = \begin{bmatrix} ^1p_{RM} \\ ^2p_{RM} \\ \vdots \\ ^Kp_{RM} \end{bmatrix} = \begin{bmatrix} ^1p_{RM1} & ^1p_{RM2} & \cdots & ^1p_{RMN} \\ ^2p_{RM1} & ^2p_{RM2} & \cdots & ^2p_{RMN} \\ \vdots & \vdots & \ddots & \vdots \\ ^Kp_{RM1} & ^Kp_{RM2} & \cdots & ^Kp_{RMN} \end{bmatrix} \qquad (2)$$

Hierbei ist der Ausdruck $^kp_{RM}$ der k-te Vektor von RSS-Werten aus der Menge von K Stützstellen und der Ausdruck $^kp_{RHn}$ ist der Feldstärkewert für die Basisstation n des Vektors $^kp_{RM}$.

Bei fester Anzahl von Stützstellen müssen die Stützstellen noch geeignet im Raum verteilt werden. Es besteht hierbei die Möglichkeit, dass ein Gitter mit gleichmäßigem Abstand verwendet wird, wobei die Distanz zwischen den Gitterpunkten bekannt ist. Ferner können die Positionen von zuvor gemessenen Trainingsdaten als die Gitterpunkte verwendet werden.

Um nunmehr mit Hilfe der oben definierten Orts-Feldstärkekarte aus gemessenen Feldstärkewerten am Objekt die Position zu orten, wird in den hier beschriebenen Ausführungsform ein Fingerprinting-Verfahren (auch als "Pattern Matching" bezeichnet) eingesetzt. Dieses Verfahren ist hinlänglich aus dem Stand der Technik bekannt und wird deshalb im Folgenden nur kurz umrissen.

Die Orts-Feldstärkekarte beschreibt die Feldstärke als eine Funktion der Position, das heißt sie bildet die zwei- bzw. dreidimensionalen Positionsvektoren in N-dimensionale Feldstärkevektoren ab. Das umgekehrte Problem, d.h. eine Position aus dem Feldstärkevektor zu ermitteln, wird als Lokalisations-Abschätzung bzw. Lokalisation bezeichnet und stellt den Schritt der Ortung dar, wie er beispielsweise allgemein in Schritt b) des Anspruchs 1 definiert ist.

Typischerweise gibt es keine analytische Beschreibung der inversen Funktion, durch welche die Orts-Feldstärkekarte erzeugt wurde. Die Lokalisations-Aufgabe kann deshalb wie folgt definiert werden:

Ausgehend von einer Orts-Feldstärkekarte RM, welche die Feldstärke-Verteilung in einem Raum für N Basisstationen BS beschreibt, und für einen vorgegebenen gemessenen Feldstärkevektor $p_{meas} = [p_{meas1} \ p_{meas2} \ ... \ p_{measN}]^T$, der an einer unbekannten Position $pos_{meas} = [x_{meas} \ y_{meas}]$ bestimmt wurde, muss die Position $^kpos_{RM}$ in der Orts-Feldstärkekarte RM gefunden werden, so dass eine vorgegebene Kostenfunktion zwischen $p_{meas}$ und dem

Feldstärkevektor $^k p_{RM}$ minimiert wird. Dies kann auf verschiedene Art und Weise erreicht werden, aber für die hier gestellte Aufgabe eignen sich am besten Pattern-Matching-Algorithmen, da $p_{meas}$ als ein Muster betrachtet werden kann, welches auf ein gegebenes Modell, dargestellt durch die Orts-Feldstärkekarte RM, abgebildet werden muss.

In den hier beschriebenen Ausführungsformen verwendet der Pattern-Matching-Algorithmus einen sequentiellen Durchgang durch den Suchraum, um nach derjenigen Position $^k pos_{RM}$ in der Orts-Feldstärkekarte zu suchen, welche folgende Kostenfunktion minimiert.

$$\Gamma(h) = \sum_{n=1}^{N} (p_{\text{meas }n} - {}^h p_{RMn})^2 \qquad (3)$$

Hierbei steht der Index h für die h-te Position $^h pos_{RM}$ in dem Suchraum und n ist der Index der Basisstationen. $p_{\text{meas }n}$ ist das n-te Element des gemessenen Feldstärkevektors $p_{meas}$, und $^h p_{RM\ n}$ ist das n-te Element des Feldstärkevektors $^h p_{RM}$, der aus der Orts-Feldstärkekarte RM stammt.

Der Index H, bei dem die Kostenfunktion $\Gamma$ minimal ist, d.h. H = argmin($\Gamma$), liefert die nächstgelegene räumliche Position in dem Modell (d.h. in der Orts-Feldstärkekarte) für dieses Muster. Der Ausdruck "nächstgelegen" bezieht sich direkt auf eine Abstandsmessung, welche in der Kostenfunktion definiert ist. Die Gleichung (3) liefert beispielsweise das Quadrat der euklidischen Distanz im N-dimensionalen Raum. Der Wert $^H pos_{RM}$ als die nächstliegende Übereinstimmung mit dem Suchmuster kennzeichnet den soeben beschriebenen "Nearest-Neighbour-Algorithmus" (NN). Das obige Verfahren wird in allen nachfolgend beschriebenen Ausführungsformen dazu genutzt, um aus dem gemessenen Feldstärkevektor $p_{meas}$ die geortete Position zu ermitteln.

Das erfindungsgemäße Verfahren zeichnet sich dadurch aus, dass anfangs eine mit einfachen Mitteln bestimmte Orts-Feldstärkekarte zur Ortung eingesetzt werden kann, wobei die Feldstärkekarte bei zumindest einem Teil der Ortungsschritte entsprechend aktualisiert wird, um sie an die vorliegende Umgebung genau anzupassen. Im Folgenden wird beschrieben, auf welche Weise in den hier beschriebenen Ausführungsformen die anfänglich vorliegende Orts-Feldstärkekarte bestimmt werden kann. Bei der anfänglichen Bestimmung der Orts-Feldstärkekarte werden nur die gegenseitigen Vermessungen für jede Basisstation verwendet. Mit diesen wenigen Messungen ist das anfängliche Modell nicht sehr genau, jedoch kann das Modell auf schnelle Weise erstellt werden, ohne dass ein Techniker zur Vermessung der Orts-Feldstärkekarte eingesetzt werden muss. Die Erzeugung des anfänglichen Modells in den hier beschriebenen Ausführungsformen stellt somit eine Art Selbstkalibrierung des Lokalisationssystems dar. Die Selbstkalibrierung ist unabhängig von den weiter unten beschriebenen Schritten der Aktualisierung der Orts-Feldstärkekarte.

Zur Erstellung der anfänglichen Orts-Feldstärkekarte werden theoretische Feldstärke-Ausbreitungsmodelle verwendet, welche üblicherweise den Feldstärkewert als eine Funktion der Distanz definieren und durch folgende Gleichung charakterisiert sind:

$$p = p(d) = p_0 + \gamma \cdot f(d) \qquad (4)$$

Hierbei stellt $p$ die Leistung (die Feldstärke) in logarithmischer Darstellung dar, wobei die Feldstärke von dem Abstand $d$ und den festen Parametern der Ausgangsleistung $p_0$ und des Verlustfaktors $\gamma$ abhängt. Für die Funktion $f(d)$ wird üblicherweise $10 \cdot log(d)$ verwendet, wie in der Druckschrift [1] definiert ist, wobei eine Minimaldistanz $d_0$ für die Verwendung des Modells definiert werden muss, um Singularitäten zu vermeiden. Die Minimaldistanz stellt ein Problem bei der Wellenausbreitung in Gebäuden dar, da dort ein Empfänger sehr nahe an einer Basisstation sein kann. Ferner stellt das anfängliche Modell für die Wellenausbreitung in Gebäuden eine sehr starke Näherung dar, so dass selbst ein einfacheres Wellenausbreitungs-Gesetz als gemäß Gleichung (4) keine größeren Fehler mit sich bringt, jedoch einfacher zu einer Abschätzung aus den wenigen Messwerten führt. Deshalb wurde in den nachfolgenden Ausführungsformen eine lineare Funktion $f(d)=d$ gewählt.

Basierend auf der obigen Gleichung (4) werden in den hier beschriebenen Ausführungsformen der Erfindung zwei verschiedene Modelle eingesetzt, um die Feldstärkevektoren an mehreren Stützstellen in der Orts-Feldstärkekarte bei der Initialisierung des Verfahrens festzulegen. Insbesondere wird das radiale Modell und das DPM-Modell (DPM = Dominant Path Model) betrachtet, wobei beide Modelle hinlänglich aus dem Stand der Technik bekannt sind.

In dem radialen Modell wird von einer radialen Symmetrie ausgegangen, so dass die Gleichung (4) direkt für jede Basisstation BS angewendet wird, was wiederum bedeutet, dass die von einem mobilen Objekt empfangene Feldstärke ausschließlich von dem Abstand zu der jeweiligen Basisstation abhängt. Bei der Initialisierung misst jede Basisstation BS den RSS-Wert von den N-1 benachbarten Basisstationen, so dass die zwei Parameter $p_0$ und $\gamma$ für jede Basisstation mit der Methode der kleinsten Quadrate (so genannter "Least Squares Fit") ermittelt werden können.

Das nachfolgend beschriebene DPM-Modell, welches beispielsweise aus den Druckschriften [4] und [5] bekannt ist, basiert auf einer Verbesserung des aus der Druckschrift [1] bekannten MWM-Modell (MWM = Multi Wall Model). Das MWM-Modell verwendet eine modifizierte Variante der Gleichung (4), welche die Wände mit berücksichtigt, durch welche das Feldstärkesignal auf dem direkten Weg zwischen einer sendenden Basisstation und bestimmten Messpunkten laufen muss. Die modifizierte Gleichung lautet wie folgt:

$$p = p(d) = p_0 + \gamma \cdot f(d) + \sum WAF \qquad (5)$$

Hierbei stellt der Ausdruck WAF den Wandabschwächungsfaktor dar, der ein Parameter ist, der von der Dicke der Wand und den dielektrischen Eigenschaften des Wandmaterials abhängt. Im Allgemeinen kann jede Wand ihren eigenen WAF-Faktor aufweisen. In einem einfachen Modell können verschiedene Wandtypen definiert werden. Durch die in Gleichung (5) definierte Summation können auch Ausbreitungspfade berücksichtigt werden, bei denen mehr als eine Wand durchschritten wird. Um das durch die Gleichung (5) charakterisierte Modell zu verwenden, muss eine Beschreibung der Position und Ausrichtung der Wände und/oder Gegenstände im Raum vorliegen, beispielsweise in der Form eines Gebäudeplans, der als Bild in bekannten Grafikformaten (z.B. jpeg, gif, usw.) vorliegt oder von einem CAD-System zur Verfügung gestellt wird.

Der größte Nachteil an dem MWM-Verfahren besteht darin, dass es nur direkte Pfade zwischen Empfänger und Sender betrachtet. Ein direkter Pfad muss nicht notwendigerweise mit demjenigen Pfad übereinstimmen, auf dem die stärkste Feldstärke empfangen wird (so genannter dominanter Pfad). Es kommt somit oft zu einer Abschätzung eines RSS-Werts, die geringer als der tatsächliche RSS-Wert an der betrachteten Objektposition ist.

Um dieses Problem zu lösen, berechnen hinlänglich aus dem Stand der Technik bekannte Ray-Tracing-Algorithmen alle möglichen Pfade zwischen Sender und Empfänger und summieren die einzelnen Beiträge dieser Pfade auf, wodurch eine bessere Abschätzung der Feldstärke als nur durch das MWM-Verfahren erhalten wird. Jedoch benötigt die Berechnung von allen Pfaden für jede Position sehr viel Rechenzeit. Insbesondere ist nicht nur die Anzahl der Pfade groß, sondern es wird auch eine hohe Genauigkeit der betrachteten Karte für den Algorithmus benötigt.

Das DPM-Modell liegt zwischen den beiden Techniken des MWM-Verfahrens und der Ray-Tracing-Algorithmen. Es verwendet Informationen aus der Umgebungskarte, um den dominanten Pfad zu ermitteln, der den höchsten Beitrag zur Signalstärke im gesamten Signal aufweist. Der DPM-Pfad kann länger als der MWM-Pfad sein und kann sich auch durch Wände fortsetzen. In dem DPM-Verfahren wird nur der dominante Pfad verwendet, um die empfangene Feldstärke in einer betrachteten Objektposition abzuschätzen. Das Modell wird weiterhin durch die Gleichung (5) beschrieben, es wird jedoch nur die Länge des dominanten Pfades und die entsprechenden Wände auf diesem Pfad betrachtet. Durch das DPM-Verfahren werden bessere Ergebnisse als mit dem MWM-Verfahren erhalten, und es hat sich gezeigt, dass die Ergebnisse fast so gut sind, wie die Ergebnisse, die mit den aufwändigen Ray-Tracing-Algorithmen ermittelt werden.

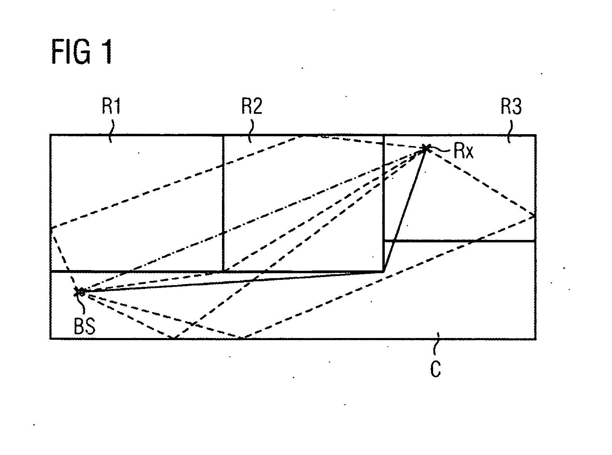

Fig. 1 zeigt am Beispiel eines einfachen Gebäudeplans, wie sich die oben beschriebenen Verfahren voneinander unterscheiden. Hierbei sind ein Korridor C sowie drei Räume R1, R2 und R3 gezeigt, welche durch entsprechende Wände abgegrenzt sind. Ferner ist eine Basisstation BS als Sender und ein Objektpunkt Rx als Empfänger dargestellt. Die strichpunktierte Linie zeigt den Pfad, der im MWM-Verfahren verwendet wird. Dieser Pfad geht durch.Wände und ist ein direkter Pfad zwischen BS und Rx. Die gestrichelten Linien zeigen die verschiedenen möglichen Signalausbreitungspfade in dem Ray-Tracing-Verfahren. In dem DPM-Verfahren wird derjenige Signalausbreitungspfad zur Berechnung der Feldstärke verwendet, über den der größte Feldstärkewert am Punkt Rx ankommt. Dies ist der so genannte dominante Pfad, der in Fig. 1 als durchgezogene Linie wiedergegeben ist. Man erkennt, dass in dem Beispiel der Fig. 1 dieser Pfad nur eine einzige Wand, nämlich die Wand zwischen dem Korridor C und dem Raum R3 durchquert.

In dem DPM-Modell kann der dominante Pfad mit Hilfe der folgenden Schritte berechnet werden (siehe auch Druckschrift [6]):

Schritt 1:

Erzeuge eine Vektor-Strukturkarte. Definiere die Raumstruktur und den Raumindex. Erzeuge eine symmetrische Raum-Verbindungs-Matrix C1. Falls der Raum i und der Raum j die gleichen Wände teilen, setze C1(i, j) = 1, ansonsten setze C1(i, j) = $\infty$.

Schritt 2:

Erkenne die Räume, in denen der Sender und der Empfänger positioniert sind, unter Verwendung des in der Druckschrift [7] definierten Algorithmus. Falls der Sender und der Empfänger in dem gleichen Raum positioniert sind, gehe direkt zu dem nachfolgenden Schritt 3. Ansonsten suche die kürzeste Raumverbindung von dem Raum des Senders zu dem Raum des Empfängers in der Matrix C1 mit Hilfe des aus dem Stand der Technik bekannten Dijkstra-Algorithmus (siehe Druckschrift [8]). Der Kostenwert für den kürzesten Pfad ist die Anzahl der durchdrungenen Wände.

Schritt 3:

Kombiniere den Raum des Senders, den Raum des Empfängers und die Räume in dem kürzesten Pfad durch Weglassen der Wände, die sich die Räume teilen.

Schritt 4:

Erkenne konvexe Ecken in dem derart kombinierten Raum und erzeuge eine symmetrische Verbindungs-Matrix C2 zwischen dem Sender, dem Empfänger und den konvexen Ecken. Falls es kein Objekt zwischen dem Punkt i und dem Punkt j gibt, entspricht C2(i, j) dem Abstand zwischen dem Punkt i und dem Punkt j. Ansonsten wird C2(i, j) auf $\infty$ gesetzt.

Schritt 5:

Finde den kürzesten Pfad zwischen dem Sender und dem Empfänger in der Matrix C2 über den oben erwähnten Dijkstra-Algorithmus. Der Kostenwert des kürzesten Pfades ist durch die Summe der Distanzen gegeben. Dieser kürzeste Pfad wird als gebeugter Pfad bezeichnet.

Schritt 6:

Verwende gegenseitige Feldstärke-Messungen, um die Parameter $p_0$, $\gamma$ und WAF in dem DPM-Modell anhand eines Least-Square-Fits abzuschätzen.

Schritt 7:

Berechne den Verlust auf dem direkten Pfad zwischen Sender und Empfänger und für den gebeugten Pfad, der in Schritt 5 erhalten wurde. Falls der Verlust auf dem gebeugten Pfad geringer ist als auf dem direkten Pfad, wird der gebeugte Pfad als der dominante Pfad verwendet. Ansonsten wird der direkte Pfad als der dominante Pfad verwendet.

Schließlich wird mit Hilfe der Information aus der geografischen Karte und dem DPM-Modell die anfängliche Orts-Feldstärkekarte erhalten. Dies erfolgt dadurch, dass für jede Position in der Orts-Feldstärkekarte die Länge des dominanten Pfades bestimmt wird und daraus dann die entsprechende Feldstärke an der jeweiligen Position mit der Formel (5) erhalten wird. Es liegt dann eine diskrete Orts-Feldstärkekarte vor, bei der für jede Stützstelle die örtliche Position und der entsprechende Feldstärkevektor angegeben ist.

Die hier beschriebenen Ausführungsformen des erfindungsgemäßen Verfahrens verwenden eine Orts-Feldstärkekarte, welche auf beliebige Weise erzeugt wurde, wobei insbesondere eines der oben beschriebenen Verfahren zur Generierung einer solchen Orts-Feldstärkekarte verwendet wird. Die anfängliche Orts-Feldstärkekarte ist hierbei nur sehr grob und weist nicht die erwünschte Genauigkeit zur exakten Lokalisation von Objekten auf. Deshalb wird erfindungsgemäß eine Aktualisierung der Feldstärkekarte z.B. immer dann durchgeführt, wenn die Position eines mobilen Objekts gerade geortet wird. In den nachfolgend beschriebenen Ausführungsformen wird ein Online-Lernverfahren verwendet, bei der neue Ortungen dazu verwendet werden, um die anfängliche Orts-Feldstärkekarte zu modifizieren und dadurch die Lokalisations-Genauigkeit zu verbessern.

Dass Lernverfahren ist dabei ein Verfahren, welches auf der so genannten Kohonen-Selbstorganisierungs-Karte (siehe Druckschrift [2]) beruht. Die Aktualisierung wird mit einem Korrekturterm für den Fehler erreicht, wobei dieser Korrekturterm als so genannte "Update-Surface" bzw. Aktualisierungs-Fläche bezeichnet wird. Diese Aktualisierungs-Fläche wird zu den einzelnen Feldstärkewerten der Orts-Feldstärkekarte addiert, um hierdurch die Genauigkeit der Feldstärkewerte an den einzelnen Stützstellen zu verbessern. Die Aktualisierungs-Flächen werden für jede Basisstation BSn ermittelt und basieren auf dem lokalen Fehler $\Delta p_n$, der definiert ist als:

$$\Delta p_n = p_{meas\ n} - p_{RM\ n}, \qquad (6)$$

wobei $p_{meas\ n}$ die gemessene Feldstärke und $P_{RM\ n}$ die Feldstärke ist, welche durch die Orts-Feldstärkekarte vorgegeben ist, und zwar z.B. die Feldstärke an derjenigen Kartenposition, welche durch die Ortung mit dem Fingerprinting-Verfahren bestimmt wurde. Das Zentrum der Aktualisierungs-Fläche ist definiert durch eine spezifische Position in der OrtsFeldstärkekarte, welche als $^cpos = [^cx\ ^cy]$ bezeichnet ist. Die Bestimmung von $^cpos$ hängt von der Art und Weise der Lokalisierung ab, wie weiter unten näher beschrieben wird. Der Maximalwert dieser Aktualisierungs-Flächen wird durch einen Faktor κ skaliert, der als Lernrate betrachtet wird, und der Absolutwert der Aktualisierungs-Fläche fällt gleichmäßig in alle Richtungen ab und erreicht schließlich Null. Somit ist der Einflussbereich der Aktualisierungs-Fläche räumlich durch eine Umgebung begrenzt, welche im Folgenden als Adaptionsbreite oder adw (adw = Adaptation Width) bezeichnet wird. Die Aktualisierungs-Fläche ist allgemein definiert als:

$$S_{UPD} = \Delta p \cdot f(r), \qquad (7)$$

Gemäß dieser Definition vereint die Aktualisierungs-Fläche zwei wichtige Informationsquellen, nämlich zum einen den lokalen Fehler $\Delta p$ des Feldstärkewerts und zum anderen den Gewichtungsfaktor $\int(r)$, der die Relevanz des Fehlers als eine Funktion der Distanz wiedergibt. Die Distanz bzw. der Radius r zwischen der zentralen Position $^cpos$ und einer beliebigen Funktion $pos = [x\ y]$ ist hierbei definiert als:

$$r = \sqrt{\left(x - {}^cx\right)^2 + \left(y - {}^cy\right)^2}, \qquad (8)$$

Der Gewichtungsfaktor wird in der hier beschriebenen Ausführungsform durch eine Gaußsche Oberfläche wie folgt definiert:

$$f(r) = \kappa \cdot e^{-\frac{1}{2}\left(\frac{r}{\sigma}\right)^2}, \qquad (9)$$

Dieser Gewichtungsfaktor wurde bereits in dem Dokument [2] beschrieben. Da eine Gaußglocke im Wesentlichen Null bei dem Dreifachen der Standardabweichung, d.h. bei 3σ, vom Zentrum der Glocke ist, wird die Funktion gemäß der Gleichung (9) in einer bevorzugten Ausführungsform der hier beschriebenen Erfindung durch folgende Funktion angenähert:

$$f(r) = \begin{cases} \kappa \cdot (1 - r/adw), & falls\ r \le adw \\ 0 & , falls\ r > adw \end{cases} \qquad (10)$$

Gemäß dieser Funktion wird eine Adaptionsbreite adw festgelegt, welche vorzugsweise bei 3σ liegt. Alle Funktionswerte außerhalb dieser Adaptionsbreite werden auf Null gesetzt. Dies bedeutet, dass Feldstärkewerte für Positionen mit einem Abstand größer als 3σ vom Zentrum der Gaußglocke nicht aktualisiert werden..Man macht sich hierbei die Tatsache zunutze, dass ein lokaler Fehler nur in einem bestimmten Umkreis um den betrachteten Messpunkt von Relevanz ist, da bei weiter entfernten Stützstellen weitere Einflüsse das Messergebnis verfälschen können.

Während des Lernverfahrens, insbesondere bei der Erzeugung der Aktualisierungs-Fläche, gibt es zwei Möglichkeiten, den lokalen Fehler, der gemäß Gleichung (6) definiert ist, zu bestimmen.

Gemäß einer Variante wird der zentrale Fehler betrachtet, bei dem die gemessene Feldstärke $p_{meas} = {}^cp$ mit der georteten Position $pos_{RM}(^cp)$ in der Feldstärkekarte verknüpft wird. Die geortete Position wird hierbei vorzugsweise mit dem Fingerprinting-Verfahren bestimmt. Diese geortete Position wird als Zentrum der Aktualisierungs-Fläche verwendet, das heißt $^c\textbf{pos} = \textbf{pos}_{RM}(^c\textbf{p})$. Der lokale Fehler $^k\Delta\textbf{p}$ berechnet sich an jeder Position $^k\textbf{pos}_{RM}$ in der Orts-Feldstärkekarte für alle Basisstationen wie folgt:

$$^k\Delta p = {}^c p - {}^c p_{RM}, \qquad (11)$$

wobei der gemessene Feldstärkevektor $^c\textbf{p}$ das Zentrum $^c\textbf{pos}$ definiert. $^c\textbf{p}_{RM}$ ist dabei der Feldstärkevektor an der insbesondere über das Fingerprinting-Verfahren ermittelten georteten Position in der Orts-Feldstärkekarte. Der Index $k = \{1,2,...,K\}$ repräsentiert alle Positionen $^k\textbf{pos}_{RM}$, welche in der Orts-Feldstärkekarte existieren.

Bei der Verwendung des zentralen Fehlers ist $^k\Delta\textbf{p} = \Delta\textbf{p}$ für alle k konstant und hängt nur von der Wahl von $^c\textbf{pos}$ ab. Der Satz von allen $^k\Delta\textbf{p}$ für alle K Stützstellen in der Orts-Feldstärkekarte erzeugt dann Aktualisierungs-Flächen mit konstanten Werten, und zwar jeweils eine Aktualisierungs-Fläche für jede Basisstation. Der Lokalisierungsfehler $\Delta\textbf{p}$ stellt somit einen Vektor mit konstanten Multiplikatoren in Gleichung (7) dar.

Durch eine kleine Veränderung der Gleichung (11) wird der zentrale Fehler in einen Nachbarschaftsfehler umgewandelt, der wie folgt definiert ist:

$$^k\Delta p = {}^c p - {}^k p_{RM}, \qquad (12)$$

wobei $^k\Delta\textbf{p}$ nunmehr nicht mehr konstant im Raum ist, da $^c\textbf{p}$ mit einem Satz von K Feldstärkewerten verglichen wird, welche aus der Orts-Feldstärkekarte stammen. Aus Effizienzgründen werden hierbei nur die Positionen zur Berechnung sowohl des zentralen als auch des Nachbarschaftsfehlers verwendet, welche in dem Gebiet liegen, das durch die obige Adaptionsbreite adw begrenzt ist.

Gemäß dem soeben beschriebenen Verfahren kann eine Aktualisierung der Orts-Feldstärkekarte durch Gaußfunktionen erreicht werden, deren Zentrum durch eine geortete Position gegeben ist, welche mit Hilfe des oben beschriebenen Fingerprinting-Verfahrens ermittelt wurde. Es handelt sich hierbei um ein unüberwachtes Lernen, da zu keiner Zeit die tatsächliche Position des Objektes bekannt ist, sondern immer die geortete Position als Zentrum der Aktualisierungs-Fläche verwendet wird.

In einer weiteren Variante der Erfindung kann das obige Verfahren jedoch auch zu einem überwachten Lernen genutzt werden, wie nachfolgend beschrieben wird.

Im Folgenden wird ein so genanntes Path-Presetting-Verfahren (auch als PPS-Verfahren bezeichnet) betrachtet. Dieses Verfahren dient insbesondere zur Kalibrierung einer Orts-Feldstärkekarte. Dabei läuft ein Techniker mit dem mobilen Objekt das Gebiet der Orts-Feldstärkekarte ab, wobei beim Ablaufen des Gebiets bekannt ist, an welchen Positionen sich das mobile Objekt befindet. Der Techniker läuft von einer Basisstation zur nächsten und muss dabei angeben, bei welcher Basisstation er startet und bei welcher Basisstation er ankommt. Alle Ortungsmessungen zwischen den Basisstationen erfolgen auf einem definierten Pfad und an definierten Messpunkten, wobei zu Testzwecken eine gerade Linie mit gleichmäßig beabstandeten Messpunkten betrachtet wird. Im Unterschied zum unüberwachten Lernen ist für jeden neu gemessenen Feldstärkevektor $^c\textbf{p}$ die Position $^c\textbf{pos}$ direkt als Position auf dem definierten Pfad bekannt. Diese bekannte Position wird als Zentrum der verwendeten Aktualisierungs-Fläche eingesetzt. Da die Position $^c\textbf{pos}$ auf vorbekannten Informationen basiert, wird dieses Kalibrationsverfahren als überwachtes Lernen bezeichnet.

Die Wahl der Pfade, die bei der Kalibrierung durch das mobile Objekt durchlaufen werden, soll der Anforderung Rechnung tragen, dass ein möglichst großes Gebiet der Orts-Feldstärkekarte abgedeckt wird. Insbesondere können Pfade, welche sich über lange Distanzen erstrecken, einen besseren gelernten Datensatz liefern als Pfade, die nur nahe beieinander liegende Basisstationen verbinden. Deshalb hat die Sequenz der abgelaufenen Pfade direkten Einfluss auf die Qualität der Kalibrierung. Für N Basisstationen BS existieren $(N^2-N)/2$ unterschiedliche direkte Verbindungspfade und im Folgenden wird eine bevorzugte Variante beschrieben, in welcher Reihenfolge das mobile Objekt die Pfade ablaufen soll, um eine gute Kalibrierung zu erreichen.

Zunächst wird die Matrix $\textbf{path}_{(i,j)}$ definiert, welche Q geordnete kollineare Positionen zwischen den Basisstationen BSi und BSj umfasst ($\textbf{pos}_{BSi} = {}^1\textbf{pos}, \textbf{pos}_{BSj} = {}^Q\textbf{pos}$). Jede Position $^q\textbf{pos}$ in dem Pfad $\textbf{path}_{(i,j)}$ (wobei $q = \{1, 2,..., Q\}$) definiert auch die Position des Zentrums der verwendeten Aktualisierungs-Flächen, d.h. $^c\textbf{pos} = {}^{cq}\textbf{pos}.$ Der Pfad $\textbf{path}_{(i,j)}$ lässt sich als Vektor wie folgt schreiben:

$$path_{(i,j)} = \begin{bmatrix} {}^1pos \\ {}^2pos \\ \vdots \\ {}^{Q-1}pos \\ {}^Q pos \end{bmatrix} = \begin{bmatrix} {}^{c1}pos \\ {}^{c2}pos \\ \vdots \\ {}^{cQ-1}pos \\ {}^{cQ} pos \end{bmatrix} . \qquad (13)$$

Hierbei stellt jeder Eintrag eine zwei- bzw. dreidimensionale Position der Messpunkte auf dem Pfad dar. Wie bereits erwähnt, sind die einzelnen Positionen gleichmäßig beabstandet, so dass der Abstand $\Delta path_{(i,j)}$ zwischen aufeinander folgenden Positionen im $path_{(i,j)}$ wie folgt berechnet werden kann:

$$\Delta path_{(i,j)} = \frac{1}{Q}\sqrt{\left[pos_{BSi} - pos_{BSj}\right]\left[pos_{BSi} - pos_{BSj}\right]^{\mathrm{T}}} \qquad (14)$$

Um eine gute Abdeckung der Orts-Feldstärkekarte durch abgelaufene Pfade zu erreichen, wird eine so genannte Pfad-Kostenfunktion betrachtet, bei der zunächst die Distanz von jeder angenommenen Position $^q pos$ auf einem Pfad zu der nächsten Basisstation betrachtet wird. Diese Distanz wird als $^q d_{BS}$ bezeichnet und lautet wie folgt:

$$^q d_{BS} = \min_{n=1}^{N}\left(\sqrt{\left[pos_{BSn} - {}^q pos\right]\left[pos_{BSn} - {}^q pos\right]^{\mathrm{T}}}\right) \qquad (15)$$

Mit Hilfe dieser Funktion wird ein Kostenwert $\Gamma_{path}$ für einen Pfad dadurch berechnet, dass das Maximum aus allen Distanzen gemäß Gleichung (15) für einen Pfad zwischen den Basisstationen i und j ausgewählt ist. Somit ergibt sich folgende Kostenfunktion:

$$\Gamma_{path}(i, j) = \max_{q=1}^{Q}\left({}^q d_{BS}\right) \qquad (16)$$

Diese Pfad-Kostenfunktion gibt wieder, wie stark das Gebiet, durch das der Pfad verläuft, von Basisstationen entfernt ist. Um eine gute Kalibrierung zu erreichen, werden gemäß der hier beschriebenen Variante des erfindungsgemäßen Verfahrens zunächst Pfade mit hohen Pfadkosten durchlaufen. Das heißt, die Pfade werden in absteigender Reihenfolge ihrer Kosten durch das mobile Objekt durchlaufen. Es sei hierbei angemerkt, dass die Wahl der Pfade selbst durch bestimmte Einschränkungen beeinflusst werden kann, beispielsweise dadurch, dass zuvor bereits angenommene Positionen dynamisch bei der Berechnung neuer Pfadkosten berücksichtigt werden.

Jeder Pfad kann nunmehr als ein Satz von Messpunkten betrachtet werden, wobei jeder dieser Messpunkte mit einem lokalen Fehler gemäß oben beschriebener Gleichung (6) verknüpft ist. Aus diesem Grund wird in der hier beschriebenen Ausführungsform ein Pfad als gesamtes betrachtet und blockweise adaptiert, wohingegen in der zuvor beschriebenen Ausführungsform nach jeder Ortung in einem Messpunkt eine Adaption der Orts-Feldstärkekarte erfolgen kann. In der nun beschriebenen Ausführungsform werden jedoch alle Positionen, welche zu einem betrachteten Pfad gehören, bei der Berechnung der Aktualisierungs-Fläche berücksichtigt. Somit findet die Aktualisierung immer erst nach dem Durchqueren eines Pfades durch das mobile Objekt statt.

In der hier beschriebenen Variante werden als Gewichtung des lokalen Fehlers wiederum die Gaußsche Fläche gemäß Gleichung (9) verwendet. Diese Fläche basiert auf dem zentralen Fehler, der durch die Gleichung (11) gegeben ist. Um alle Positionen auf einem Pfad zwischen den Basisstationen BSi und BSj gleichzeitig zu berücksichtigen, sind einige Modifikationen bei der Zusammensetzung der Aktualisierungs-Fläche gemacht worden.

Die erste Modifikation besteht darin, dass die Standardabweichung σ proportional zu dem gleichmäßigen Abstand zwischen den Positionen auf dem Pfad gemacht wurde, das heißt proportional zu $\Delta path_{(i,j)}$. Es gilt somit σ = Φ · $\Delta path_{(i,j)}$. Dies bedeutet, dass jeder Pfad eine eigene Standardabweichung σ für ein festes Φ aufweist, sofern $\Delta path_{(i,j)}$

für jeden Pfad unterschiedlich ist.

Die Sequenz der Positionen entlang des Pfads erzeugt eine Sequenz von Gaußglocken für jede Position auf dem Pfad, wobei die Gaußglocken miteinander überlappen. Es sollte deshalb eine Art von Normalisierung verwendet werden, um zu erreichen, dass die Summe aller Gaußglocken entlang des Pfads in den Grenzen der ursprünglichen lokalen Fehlerwerte auf der Aktualisierungs-Fläche liegt. Die hier verwendete Normalisierung basiert auf der so genannten "Partitioning-To-One-Normalistation", welche in radialen Netzwerken verwendet wird (siehe Druckschrift [3]).

Ähnlich zur Gleichung (8) wird der Radius r für die zentrale Position $^c pos$ und für die q-te Position $^{cq} pos$ auf einem Pfad wie folgt als $^q r$ definiert:

$$^q r = \sqrt{\left(x - ^{cq} x\right)^2 + \left(y - ^{cq} y\right)^2} \tag{17}$$

Dementsprechend modifiziert sich der in Gleichung (11) definierte lokale Fehler für eine Sequenz an Pfadpositionen $^{cq} pos$ wie folgt:

$$^{kq} \Delta p = {}^q \Delta p = {}^{cq} p - {}^{cq} p_{RM}. \tag{18}$$

Unter Verwendung von $^q r$ und $^q \Delta p$ in der Gleichung (7) bzw. (9) ergibt sich als normalisierte Aktualisierungs-Fläche für die q-te Pfadposition $^q pos$ und für die Basisstation n folgender Term:

$$S_{UPD}(r,q) = \kappa \; ^q \Delta p_n \; \frac{e^{-\frac{1}{2}(\frac{^q r}{\sigma})^2}}{\sum_{g=1}^{Q} e^{-\frac{1}{2}(\frac{^s r}{\sigma})^2} + \zeta} \tag{19}$$

Hierbei ist $\zeta$ ein positiver Term, um sicherzustellen, dass der Nenner niemals Null wird, was bedeutet, dass die normalisierten Gaußschen Oberflächen auch tatsächlich auf Null an Positionen in großer Entfernung vom Zentrum abfallen. Es ist hierbei insbesondere zu berücksichtigen, dass die Wahl von $\zeta$ auch Deformationen in der Oberfläche einführt. Falls $\zeta$ zu groß ist, reskaliert sich die Oberfläche zu kleineren Werten. Falls $\zeta$ zu klein ist, nimmt die Oberfläche rechteckige Formen anstatt einer Glocke an, obwohl die Oberfläche auf Eins normalisiert ist. Es hat sich gezeigt, dass ein bevorzugter Wert für $\zeta$ bei 0,3 liegt.

Der wesentliche Unterschied zwischen der soeben beschriebenen Kalibrierung mit dem PPS-Verfahren und der Kalibrierung mit unüberwachtem Lernen besteht darin, dass beim unüberwachten Lernen bei jeder neuen Messung des Feldstärkewerts $^c p$ die Position $^c pos$ ausschließlich aus dem bei der Ortung verwendeten Modell abgeleitet wird, insbesondere mit dem Fingerprinting-Verfahren. Dies bedeutet, dass die mit der ursprünglich verwendeten Orts-Feldstärkekarte abgeschätzten Positionen verwendet werden, um das Modell (das heißt die Orts-Feldstärkekarte) zu aktualisieren, und zwar ohne das Wissen über die tatsächliche Position des Objekts.

Ein weiterer wichtiger Unterschied zwischen dem unüberwachten und dem überwachten Lernen besteht darin, dass beim unüberwachten Lernen die Messungen an jedem Ort in der Orts-Feldstärkekarte vorgenommen werden können und sich nicht nur auf direkte Pfade zwischen zwei Basisstationen beschränken, wie dies beim PPS-Verfahren der Fall ist. Es können somit mehr Punkte beim Lernen berücksichtigt werden.

Ein weiterer Unterschied besteht darin, dass beim unüberwachten Lernen die Aktualisierung der Orts-Feldstärkekarte bei jeder neuen Messung durchgeführt wird, wohingegen die Aktualisierung im PPS-Verfahren erst nach Durchlaufen eines Pfades durchgeführt werden kann.

Im Folgenden werden experimentelle Ergebnisse vorgestellt, welche auf von den Erfindern durchgeführte Experimente beruhen, mit welchen Objekte mit den zuvor beschriebenen Varianten des erfindungsgemäßen Verfahrens lokalisiert wurden.

Das erfindungsgemäße Verfahren wurde für unterschiedliche Umgebungen in Bürogebäuden getestet. Als anfängliches Modell wurde sowohl das radiale Modell als auch das DPM-Modell für jede Umgebung und sowohl für das überwachte Lernverfahren als auch für das unüberwachte Lernverfahren verwendet.

Zur Bestimmung des Lokalisationsfehlers wurde die gesamte Messung betrachtet. Es wurde der mittlere Fehler der Positionsabschätzung berechnet. Der Fehler selbst ist die Distanz zwischen der abgeschätzten Position und der tatsächlichen Position, bei der die Messung durchgeführt wurde. Jede Position wurde dreimal gemessen und hieraus wurde der Durchschnitt gebildet.

Für das überwachte Lernen wurde eine Orts-Feldstärkekarte auf der Basis eines regelmäßig beabstandeten Gitters verwendet, wobei jede Stützstelle von der anderen um einen Meter versetzt ist. Die tatsächlichen Messpositionen waren nicht exakt kollinear mit den direkten Pfaden zwischen den Basisstationen. Jedoch wurden die Positionen so gewählt, dass sie so nahe wie möglich an dem direkten Pfad lagen. Somit konnte davon ausgegangen werden, dass $\Delta path_{(i,j)}$ für jeden Pfad konstant ist. Der Lokalisationsfehler wurde immer dann berechnet, wenn ein einzelner Pfad zwischen zwei Basisstationen durch das mobile Objekt abgelaufen worden ist. Bei den weiter unten erläuterten Diagrammen ist somit auf der Abszisse die Nummer des Pfads wiedergegeben.

Für das unüberwachte Lernen wurden die Stützstellen der Orts-Feldstärkekarte durch die tatsächlichen Messpositionen gebildet. Der Lokalisationsfehler wurde bei jeder neuen Messung berechnet. Die Messungen wurden zufällig aus einem Satz von Messungen gewählt, wobei wiederholte Messungen ohne Einschränkungen erlaubt waren. Sowohl für das überwachte als auch für das unüberwachte Lernen wurden die Kontrollparameter K und Φ variiert.

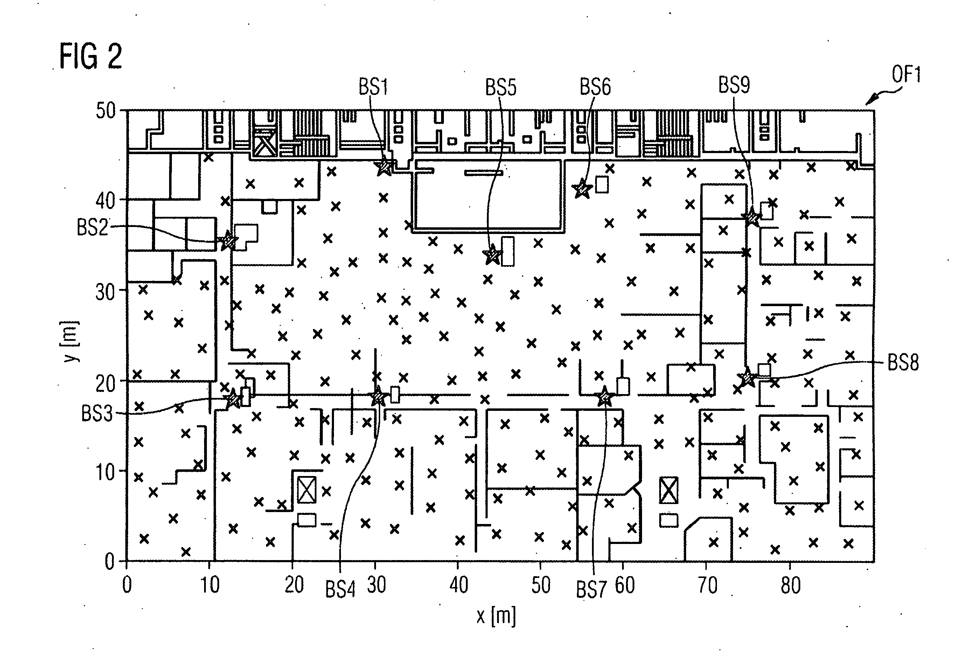

Fig. 2 zeigt den Plan eines ersten Gebäudes OF1, in dem das erfindungsgemäße Verfahren durchgeführt wurde. In dem Gebäude sind neun Basisstationen BS1, BS2, ..., BS9 installiert, welche durch Sterne angedeutet sind. Es wurde in dem Gebäude an insgesamt 223 unterschiedlichen Messpunkten gemessen, wobei diese Messpunkte als Kreuze in Fig. 1 angedeutet sind. Bei den Basisstationen handelt es sich um Sende- und Empfangseinheiten nach dem DECT-Standard. Für das PPS-Verfahren führt eine Kombination von allen möglichen Pfaden zwischen den Basisstationen zu 36 unterschiedlichen Pfaden. Betrachtet man nur die Messpunkte entlang der Pfade, besteht die Messung nur noch aus 88 unterschiedlichen Messpunkten. Die Reihenfolge der abgelaufenen Pfade wurde über die obige Gleichung (16) gefunden. Für die ersten 10 Pfade mit den Nummern 1 bis 10 wurden folgende Basisstationen miteinander verbunden:

Pfad Nr. 1: von Basisstation BS8 nach Basisstation BS3
Pfad Nr. 2: von Basisstation BS3 nach Basisstation BS1
Pfad Nr. 3: von Basisstation BS1 nach Basisstation BS8
Pfad Nr. 4: von Basisstation BS8 nach Basisstation BS2
Pfad Nr. 5: von Basisstation BS2 nach Basisstation BS9
Pfad Nr. 6: von Basisstation BS9 nach Basisstation BS8
Pfad Nr. 7: von Basisstation BS8 nach Basisstation BS6
Pfad Nr. 8: von Basisstation BS6 nach Basisstation BS3
Pfad Nr. 9: von Basisstation BS3 nach Basisstation BS2
Pfad Nr. 10: von Basisstation BS2 nach Basisstation BS1

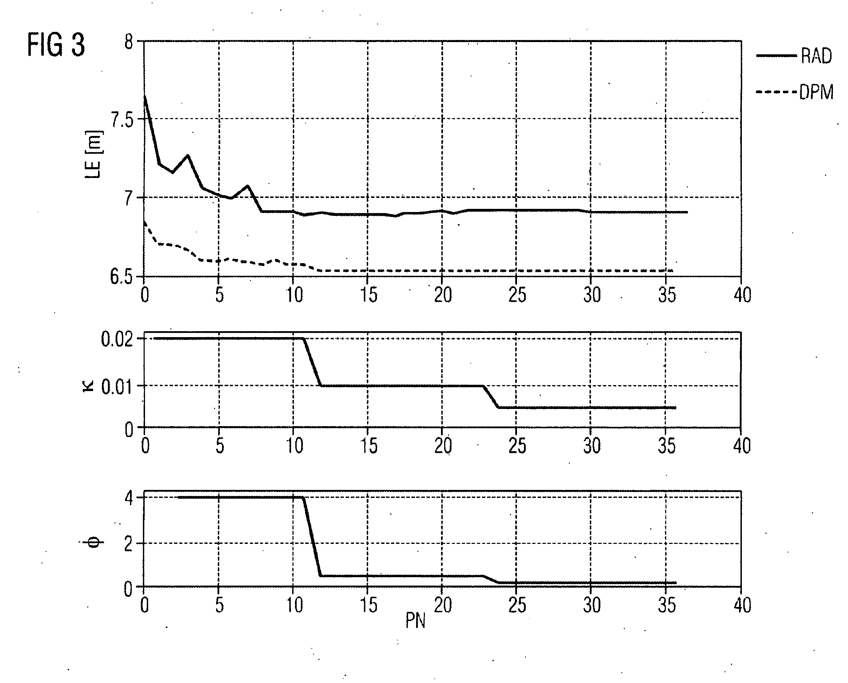

Fig. 3 zeigt Diagramme, welche den Lokalisationsfehler LE sowie die Parameter κ und Φ für das PPS-Verfahren in Abhängigkeit von der Nummer des Pfades PN für das Gebäude OF1 wiedergeben. In Übereinstimmung mit dem in der Druckschrift [2] beschriebenen Algorithmus wurden die Kontrollparameter κ und Φ derart gewählt, dass sie mit der Zeit kleiner werden. Gemäß Fig. 3 wurde der Lokalisationsfehler sowohl für das radiale Ausbreitungsmodell RAD als auch für das DPM-Modell DPM als anfängliche Modelle verglichen. Man erkennt, dass das Verfahren kleinere Lokalisationsfehler LE liefert, wenn die anfängliche Orts-Feldstärkekarte mit dem DPM-Modell berechnet wurde. Für beide Modelle wurde der Lokalisationsfehler LE mit zunehmender Anzahl von abgelaufenen Pfaden immer geringer.

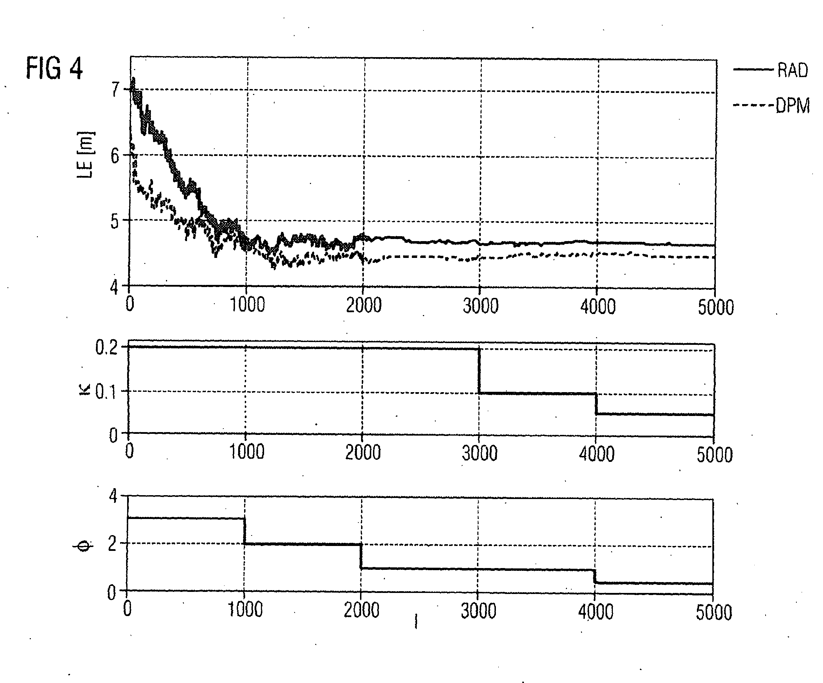

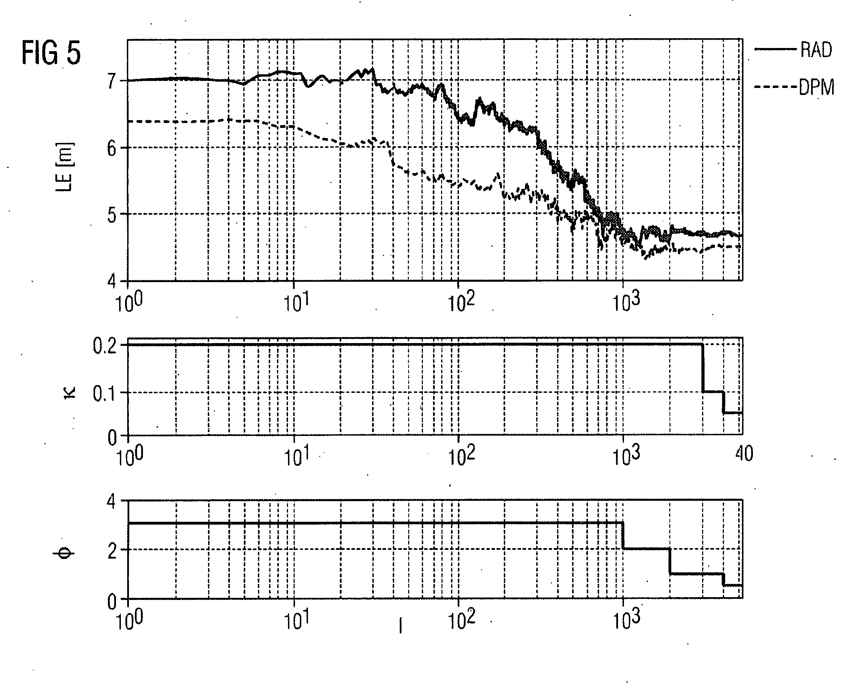

Fig. 4 zeigt eine Darstellung analog zu Fig. 3, wobei zum Lernen das unüberwachte Lernverfahren für das Gebäude OF1 verwendet wurde. Es wurden hierbei alle 223 Messposition zum Lernen verwendet und der Lernprozess wurde für 5.000 zufällig ausgewählte Messpunkte durchgeführt. Im Unterschied zu Fig. 3 sind entlang der Abszisse nunmehr die einzelnen Iterationen I, d.h. die einzelnen Messungen an den Messpunkten, wiedergegeben. Es wurden wiederum Fälle verglichen, bei denen als ursprüngliche Orts-Feldstärkekarte eine Karte nach dem radialen Modell RAD bzw. eine Karte nach dem DPM-Modell DPM berechnet wurde. Fig. 5 zeigt die gleichen Ergebnisse wie Fig. 4, jedoch sind die Iterationen auf einer logarithmischen Skala wiedergegeben, so dass die Entwicklung für die ersten 1000 Iterationen besser ersichtlich wird. Man erkennt, dass der Lokalisationsfehler mit steigender Anzahl an Messungen abnimmt. Das Lernen ist besonders schnell am Anfang, wenn die mit dem Modell erzeugte Orts-Feldstärkekarte noch nicht so gut ist. Zum Ende hin wird das Lernen langsamer und die Genauigkeit erreicht die maximal mögliche Genauigkeit. Die maximale Genauigkeit ist gegeben durch die Genauigkeit des verwendeten Fingerprinting-Verfahrens, mit dem die Position gemessen wird. Bei dem Fingerprinting-Verfahren werden die Punkte, bei denen der Algorithmus unüberwacht gelernt wurde, als Referenzpunkte mit bekannten Positionen verwendet. Der Lokalisationsfehler des Fingerprinting-Verfahrens ist nach unten begrenzt, und zwar durch das Messrauschen der Feldstärkemessungen (aufgrund von Signalabschattungen, des Rauschens des Messgeräts und anderen Umweltfaktoren) sowie aufgrund der Dichte der Referenzpunkte und der Anzahl der Basisstationen und weiterer Effekte. Die maximal mögliche Genauigkeit liegt für das Gebäude OF1 bei 4,6 Metern.

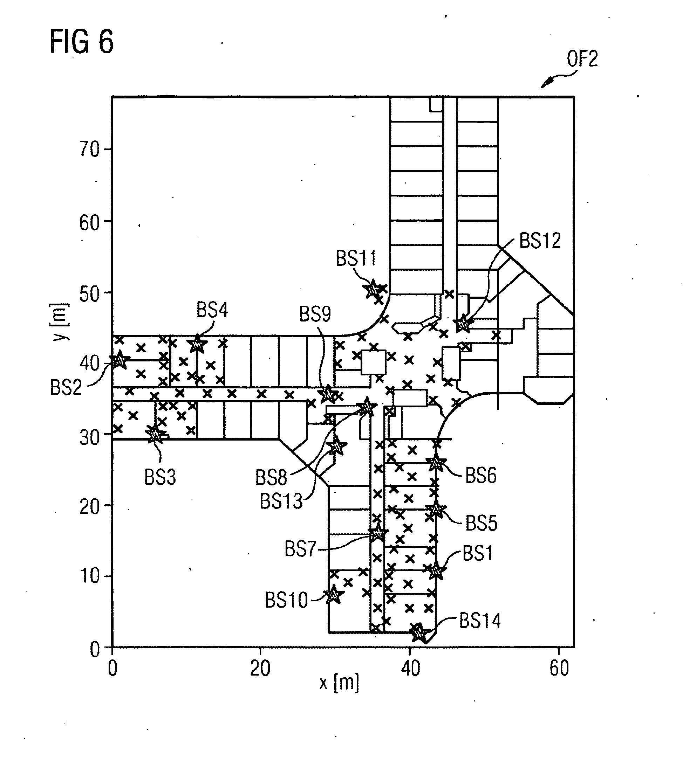

Fig. 6 zeigt den Plan eines zweiten Gebäudes OF2, für das ebenfalls das erfindungsgemäße Verfahren getestet wurde. In diesem Gebäude sind 14 WLAN-Basisstationen BS1, BS2, ..., BS14 installiert. Die Basisstationen sind wiederum als Sterne wiedergegeben. Der komplette Satz an Messungen enthält 114 unterschiedliche Messpunkte, welche als Kreuze dargestellt sind. Es wurde wiederum das überwachte PPS-Lernverfahren durchgeführt. Für dieses Verfahren führt die Kombination von allen möglichen Pfaden zwischen allen Basisstationen zu insgesamt 91 Pfaden. Die Reihenfolge der abgelaufenen Pfade wurde wiederum mit Hilfe der obigen Gleichung (16) berechnet, wobei die konkave Form des Gebäudes mit berücksichtigt wurde. Dies bedeutet dass Pfade, welche die Grenzen des Gebäudes nach außen überschreiten, nicht berücksichtigt wurden, beispielsweise der Pfad von der Basisstation BS3 zur Basisstation BS10. Für die ersten zehn Pfadnummern 1 bis 10 wurden folgende Verbindungen von Basisstationen verwendet:

Pfad Nr. 1: von Basisstation BS2 nach Basisstation BS9
Pfad Nr. 2: von Basisstation BS9 nach Basisstation BS12
Pfad Nr. 3: von Basisstation BS12 nach Basisstation BS8
Pfad Nr. 4: von Basistation BS8 nach Basisstation BS7
Pfad Nr. 5: von Basisstation BS7 nach Basisstation BS14
Pfad Nr. 6: von Basisstation BS14 nach Basisstation BS12
Pfad Nr. 7: von Basisstation BS12 nach Basisstation BS13
Pfad Nr. 8: von Basisstation BS13 nach Basisstation BS5
Pfad Nr. 9: von Basisstation BS5 nach Basisstation BS11
Pfad Nr. 10: von Basisstation BS11 nach Basisstation BS3.

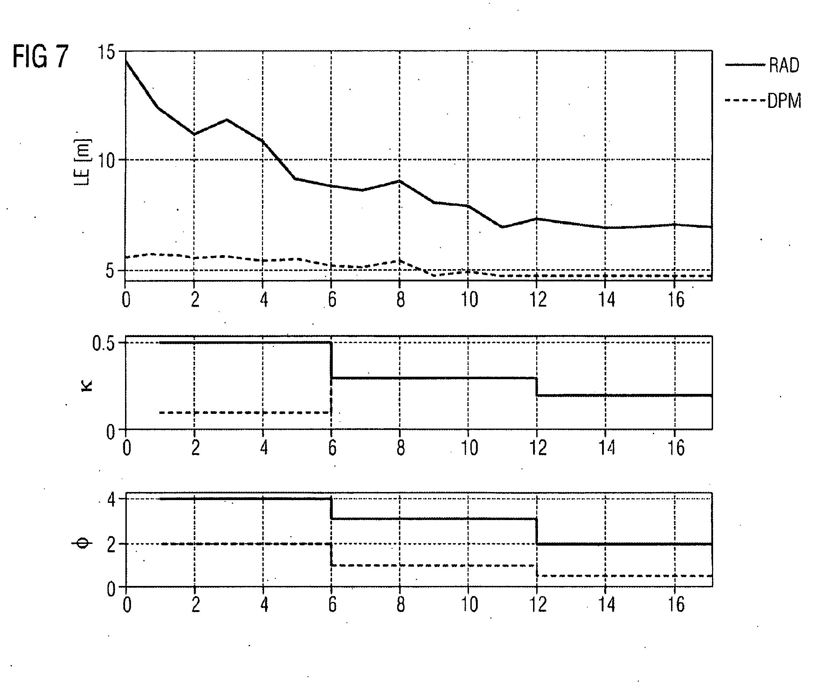

Fig. 7 zeigt wiederum den Lokalisationsfehler LE sowie die Modellparameter $\kappa$ und $\Phi$ in Abhängigkeit von der Pfadnummer PN. Es wurde der Fall einer ursprünglichen Orts-Feldstärkekarte nach dem radialen Modell RAD und der Fall einer ursprünglichen Orts-Feldstärkekarte nach dem DPM-Modell DPM berücksichtigt. Es sind hierbei die Lokalisationsfehler für die ersten 17 Pfade wiedergegeben, welche 50 unterschiedliche Positionen aus dem ursprünglichen Satz von Messungen umfassen. Die Kontrollparameter $\kappa$ und $\Phi$ nehmen analog zu Fig. 3 mit der Zeit ab.

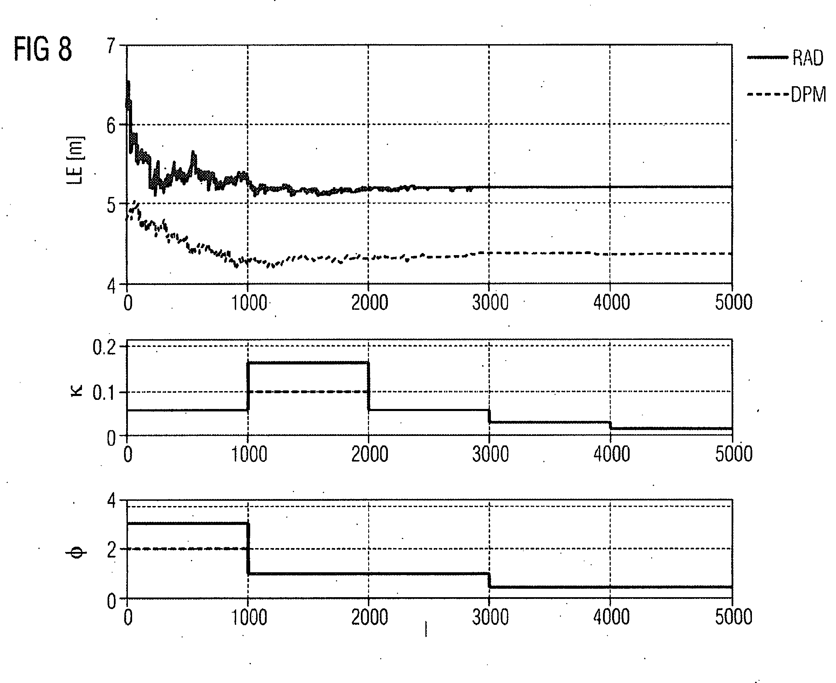

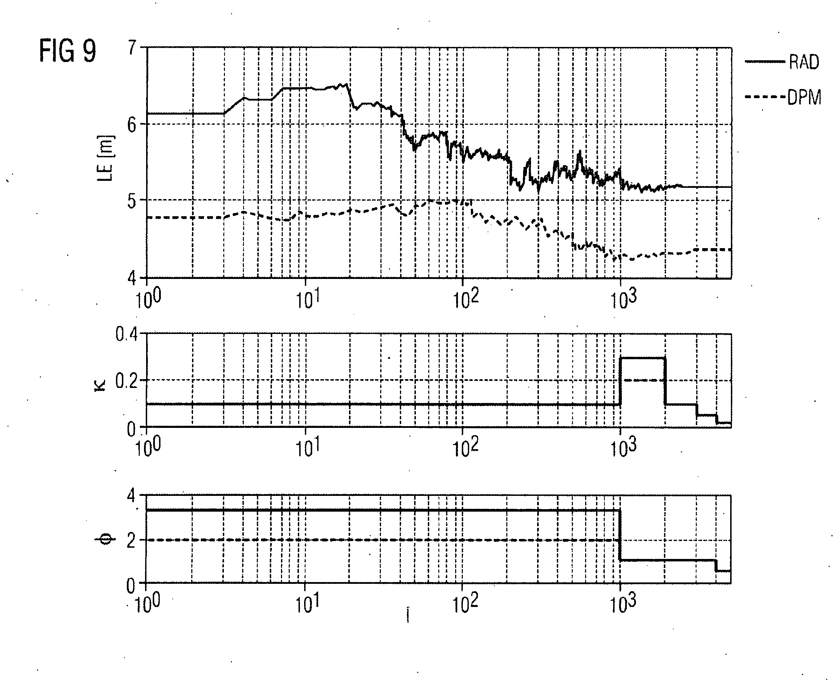

Fig. 8 zeigt das Ergebnis für das unüberwachte Lernen, wobei alle 114 Messpositionen berücksichtigt wurden. Das Lernverfahren wurde unter der Verwendung von 5000 zufällig ausgewählten Messpunkten durchgeführt. Fig. 8 zeigt die Ergebnisse auf einer linearen Skala der Abszisse und Fig. 9 zeigt die gleichen Ergebnisse auf einer logarithmischen Skala der Abszisse. Man erkennt, dass die Verwendung einer ursprünglichen Orts-Feldstärkekarte nach dem DPM-Modell deutlich bessere Ergebnisse liefert, da bei diesem Modell zusätzliche Informationen betreffend den Aufbau der Umgebung, insbesondere die Positionen der Wände, berücksichtigt werden. Die Gebäudeumgebung OF2 ist hierbei insbesondere dadurch gekennzeichnet, dass die Wände mit metallischen Folien beschichtet sind, was die Signale stark abschwächt. Demzufolge liefert die Information über die Wände bereits ein sehr gutes Anfangsmodell, was zu einem geringen Lokalisationsfehler auch vor dem Beginn des Lernverfahrens führt. Somit bringt das Lernen keine wesentliche Verbesserung des ursprünglichen Lokalisationsfehlers. Demgegenüber beginnt das Verfahren mit dem radialen Modell mit einem anfänglich sehr schlechten Lokalisationsfehler, der sich dann jedoch beim Lernen deutlich verbessert.

Wie sich aus den vorangegangenen Ausführungen ergibt, wird mit dem erfindungsgemäßen Lokalisationsverfahren eine sehr gute Lokalisations-Genauigkeit erreicht, wobei die Installations- und Instandhaltungskosten für das Verfahren sehr gering sind. Insbesondere ist keine anfängliche Kalibrierung des Verfahrens mit Hilfe von Referenzmessungen notwendig, da die Kalibrierung durch die Aktualisierung der Orts-Feldstärkekarte während des Verfahrens selbst durchgeführt wird. Das Verfahren beginnt hierbei mit einem anfänglichen Wellenausbreitungsmodell mit geringer Komplexität, dessen Parameter durch wenige Messungen, beispielsweise durch eine Selbstvermessung der Basisstationen, ermittelt wurden. Man erkennt, dass bei der Verwendung des DPM-Modells die Genauigkeit des Verfahrens besser ist als bei der Verwendung des einfachen radialen Modells. Die ursprünglichen Orts-Feldstärkekarten werden erfindungsgemäß während des Lernverfahrens online adaptiert, wobei zwischen einem unüberwachten Lernverfahren und einem überwachten Lernverfahren unterschieden wird. Beim unüberwachten Lernverfahren werden simultan die Lokalisation und die Aktualisierung der Orts-Feldstärkekarte durchgeführt. Demgegenüber wird beim überwachten Lernverfahren ein bekannter Pfad vorgegeben, auf dem sich das mobile Objekt bewegt. Die mit dem Verfahren erreichte Genauigkeit ist vergleichbar mit Lokalisations-Algorithmen, welche Referenzmessungen verwenden, wobei es in dem erfindungsgemäßen Verfahren jedoch nicht erforderlich ist, solche Referenzmessungen vor dem Start des Verfahrens durchzuführen.

Literaturverzeichnis:

[1] T. S. Rappaport, Wireless Communications Principles und Practice, 2nd Ed., Prentice Hall Inc., 2002.

[2] T. Kohonen, "The self-organizing map," Proceedings of the IEEE, vol. 78, no. 9, pp. 1464-1480, September 1990.

[3] M. Schlang, M. Haft und K. A. Fuchs, "A comparison of RBF and MLP networks for reconstruction of focal events from bioelectric/biomagnetic field patterns," in Mustererkennung 1994 Erkennen und Lernen, 16. DAGM Symposium und 18. Workshop of the ÖAGM, 1994.

[4] G. Wölfle, R. Wahl, P. Wertz, P. Wildbolz und F. Landstorfer, "Dominant path prediction model for indoor scenarios", German Microwave Conference (GeMIC) 2005, April 2005.

[5] G. Wölfle, und F. Landstorfer, "Dominant paths for the field strength prediction," 48th IEEE Vehicular Technology Conference (VTC) 1998, pp. 552-556, May 1998.

[6] H. Wang, Fusion of Information Sources for Indoor Positioning with Field Strength Measurements, Master Thesis, TU-München, 2005.

[7] M. Shimrat, "Algorithm 112: position of point relative to polygon," Communications of the ACM, vol. 5, no. 8, pp. 434, August 1962.

[8] Robert W. Floyd, "Algorithm 97: shortest path," Communications of the ACM, vol. 5, no. 6, pp. 345, 1962.

**Patentansprüche**

1. Verfahren zur rechnergestützten Lokalisation eines mobilen Objekts mit Hilfe eines merkmalsbasierten Ortungsverfahrens, mit dem die Merkmale von mehreren Basisstationen (BS1, ...,BS14) gemessen werden und hieraus unter Verwendung einer Referenzkarte (RM) die Position des Objekts geortet wird, wobei das Merkmal einer Basisstation (BS1, ..., BS14) ein von der Basisstation (BS1, ..., BS14) ausgesendetes Feld am Objekt oder ein vom Objekt ausgesendetes Feld an der Basisstation (BS1, ..., BS14) charakterisiert, **dadurch gekennzeichnet, dass** das Verfahren mit folgenden Schritten ausgeführt wird:

   a) zur Initialisierung des Verfahrens wird eine Referenzkarte ,R,M, mit einem Wellenausbreitungsmodell berechnet, die eine Vielzahl von Stützstellen umfasst, welche jeweils durch eine Position, $^k pos_{RM}$, und einen der Position ,$^k pos_{RM}$, zugeordneten merkmalsabhängigen Wert ,$^k p_{RM}$, **re**präsentiert werden;
   b) im Betrieb des Verfahrens wird eine Mehrzahl von Ortungen durchgeführt, mit denen jeweils ein gemessener merkmalsabhängiger Wert, $^c p$, und hieraus eine geortete Position, $pos_{RM}(^c p)$, des Objekts über das merkmalsbasierte Ortungsverfahren unter Verwendung der vorgegebenen mit dem Wellenausbreitungsmodell berechneten Referenzkarte, RM, ermittelt werden;
   c) für zumindest einen Teil der Ortungen werden jeweils eine oder mehrere Aktualisierungen der vorgegebenen mit dem Wellenausbreitungsmodell berechneten Referenzkarte, RM, durchgeführt, bei welchen die merkmalsabhängigen Werte, $^k p_{RM}$, an den Stützstellen der Referenzkarte, RM, in einer vorbestimmten Umgebung um eine Objektposition , $pos_{RM}(^c p)$, jeweils mit einem Korrekturterm, $S_{UPD}$, korrigiert werden, wobei der Korrekturterm, $S_{UPD}$, von der Differenz zwischen dem gemessenen merkmalsabhängigen Wert , $^c p$, der jeweiligen Ortung und dem merkmalsabhängigen Wert, $^k p_{RM}$, an einer Stützstelle in der vorbestimmten Umgebung abhängt.

2. Verfahren nach Anspruch 1, bei dem die Objektposition , $pos_{RM}(^c p)$, vorbekannt oder die durch die jeweilige Ortung ermittelte geortete Position ist.

3. Verfahren nach Anspruch 1 oder 2, bei dem der Schritt c) zum Zeitpunkt der jeweiligen Ortung oder nach der Durchführung einer vorbestimmten Anzahl an Ortungen durchgeführt wird.

4. Verfahren nach Anspruch 3 , bei dem das Wellenausbreitungsmodell ein radiales Ausbreitungsmodell ist.

**5.** Verfahren nach Anspruch 3 , bei dem das Wellenausbreitungsmodell ein MWM-Ausbreitungsmodell, MWM = Multi Wall Model, oder ein DPM-Ausbreitungsmodell, DPM = Dominant Path Model, ist.

**6.** Verfahren nach einem der Ansprüche 3 bis 5 , bei dem die Parameter des Ausbreitungsmodells zumindest teilweise durch eine Selbstvermessung der Basisstationen (BS1, ..., BS14) ermittelt werden.

**7.** Verfahren nach einem der vorhergehenden Ansprüche, bei dem die Mehrzahl von Ortungen in Schritt b) jeweils mit Hilfe eines Fingerprinting-Verfahrens und/oder mit Hilfe eines wahrscheinlichkeitstheoretischen Verfahrens durchgeführt werden.

**8.** Verfahren nach einem der vorhergehenden Ansprüche, bei dem die Größe des Korrekturterms, $S_{UPD}$, mit zunehmendem Abstand von der Objektposition, $pos_{RM}(^{c}p)$, betragsmäßig abnimmt.

**9.** Verfahren nach Anspruch 8, bei dem der Korrekturterm , $S_{UPD}$, von einer Gaußfunktion, f(r), mit Zentrum in der Objektposition, $pos_{RM}(^{c}p)$, abhängt.

**10.** Verfahren nach Anspruch 9 , bei dem die vorbestimmten Umgebung um die Objektposition, $pos_{RM}(^{c}p)$, von der Standardabweichung, $\sigma$, der Gaußfunktion, f(r), abhängt.

**11.** Verfahren nach Anspruch 10 , bei dem die vorbestimmte Umgebung durch einen Umkreis um das Zentrum der Gaußfunktion , f(r), mit einem Radius gebildet wird, welcher größer oder gleich der Standardabweichung, $\sigma$, und insbesondere ein Vielfaches, vorzugsweise das Dreifache, der Standardabweichung , $\sigma$, ist.

**12.** Verfahren nach einem der Ansprüche 9 bis 11 , bei dem die Standardabweichung, $\sigma$, der Gaußfunktion, f(r), von dem Abstand der Stützstellen der Referenzkarte, RM, abhängt und insbesondere zwischen dem Stützstellenabstand und einem Fünffachen des Stützstellenabstands liegt.

**13.** Verfahren nach einem der Ansprüche 9 bis 12 , bei dem die Gaußfunktion, f(r), durch eine Funktion approximiert wird, welche mit zunehmenden Abstand vom Zentrum auf Null abfällt und insbesondere bei einem Wert größer oder gleich der Standardabweichung, $\sigma$, vorzugsweise bei einem Dreifachen Standardabweichung, $\sigma$, Null ist.

**14.** Verfahren nach einem der vorhergehenden Ansprüche, bei dem der gemessene merkmalsabhängige Wert, $^{c}p$, ein am Objekt oder an den Basisstationen gemessener Merkmalsvektor, insbesondere ein Feldstärkevektor, zum Zeitpunkt der Ortung ist und bei dem die vorgegebene Referenzkarte, RM, eine Orts-Merkmalskarte ist, bei welcher die merkmalsabhängigen Werte Merkmalsvektoren, $^{k}p_{RM}$, für die Positionen, $^{k}pos_{RM}$, der Stützstellen sind, wobei ein Merkmalsvektor als Einträge die Merkmale der Basisstationen (BS1, ..., BS9) für die entsprechende Position umfasst.

**15.** Verfahren nach Anspruch 14 in Kombination mit einem der Ansprüche 8 bis 13, bei dem der Korrekturterm $S_{UPD}$ für eine Stützstelle k innerhalb der vorbestimmten Umgebung durch folgende Funktion gegeben ist oder von folgender Funktion abhängt:

$$S_{UPD} = {}^{k}\Delta p \cdot f(r) \quad .$$

wobei f(r) eine wie folgt definierte Gaußfunktion ist:

$$f(r) = \kappa \cdot e^{-\frac{1}{2}\left(\frac{r}{\sigma}\right)^{2}} ,$$

wobei $\sigma$ die Standardabweichung und r der Abstand von der Objektposition, $pos_{RM}(^{c}p)$, ist und $\kappa$ vorzugsweise ein Wert kleiner als 1 und besonders bevorzugt kleiner oder gleich 0,5 ist,
wobei $^{k}\Delta p$ ein Differenzmerkmalsvektor mit jeweils einen Eintrag für das Merkmal einer Basisstation von N Basisstationen ist,

wobei der Differenzmerkmalsvektor $^k\Delta p$ entweder definiert ist als:

$$^k\Delta p \;=\; {}^c p \;-\; {}^c p_{RM},$$

wobei $^c p$ der gemessene Merkmalsvektor zum Zeitpunkt der Ortung ist und $^c p_{RM}$ ein mit der Orts-Merkmalskarte (RM) bestimmter Merkmalsvektor an der georteten Position ist,

oder definiert ist als:

$$^k\Delta p \;=\; {}^c p \;-\; {}^k p_{RM},$$

wobei $^c p$ der gemessene Merkmalsvektor zum Zeitpunkt der Ortung ist und $^k p_{RM}$ der Merkmalsvektor an der Stützstelle k der Orts-Feldstärkekarte ist.

16. Verfahren nach Anspruch 15 , bei dem der Weg des mobilen Objekts vorgegeben ist und die Objektposition, $pos(^c p)$, zum Zeitpunkt einer jeweiligen Ortung eine vorbekannte Position ist.

17. Verfahren nach Anspruch 16, bei dem das Objekt sich auf einem oder mehreren vorbestimmten Wegabschnitten zwischen jeweils zwei Basisstationen (BS1, ..., BS14) bewegt, wobei auf dem jeweiligen Wegabschnitt Q Objektpositionen vorbekannt sind und an diesen Objektpositionen jeweils eine Ortung durchgeführt wird.

18. Verfahren nach Anspruch 17 , bei dem an der Objektposition q; q = 1, ...,Q; aus den Q Objektpositionen auf einem Wegabschnitt der Korrekturterm $S_{UPD}(r, q)$ wie folgt definiert ist:

$$S_{UPD}(r,q) = \kappa \; {}^q\Delta p \cdot \frac{e^{-\frac{1}{2}\left(\frac{^q r}{\sigma}\right)^2}}{\sum\limits_{g=1}^{Q} e^{-\frac{1}{2}\left(\frac{^g r}{\sigma}\right)^2} + \zeta}$$

wobei $\sigma$ die Standardabweichung und $^q r$ der Abstand von der Objektposition q und $^g r$ der Abstand von der Objektposition g ist und wobei $\kappa$ vorzugsweise ein Wert kleiner oder gleich 0,5 ist,

wobei $\zeta$ ein positiver Term ist, der sicherstellt, dass der Nenner nicht Null wird, wobei $\zeta$ vorzugsweise kleiner als 1 ist und insbesondere 0,3 beträgt,

wobei $^q\Delta p$ ein Differenzmerkmalsvektor mit jeweils einen Eintrag für das Merkmal einer Basisstation von N Basisstationen ist,

wobei der Differenzmerkmalsvektor $^q\Delta p$ definiert als:

$$^q\Delta p \;=\; {}^{cq} p \;-\; {}^{cq} p_{RM},$$

wobei $^{cq} p$ der gemessene Merkmalsvektor zum Zeitpunkt der Ortung an der Objektposition q ist und $^{cq} p_{RM}$ ein mit der Orts-Merkmalskarte, RM, ermittelter Merkmalsvektor an der georteten Position ist.

19. Verfahren nach Anspruch 18 , bei dem der Abstand , $\Delta path_{(i,j)}$, zwischen aufeinander folgenden Objektpositionen auf einem vorbestimmten Wegabschnitt konstant ist und die Standardabweichung, $\sigma$, von dem konstanten Abstand, $\Delta path_{(i,j)}$, abhängt und insbesondere direkt proportional zu dem konstanten Abstand, $\Delta path_{(i,j)}$, ist.

**20.** Verfahren nach einem der Ansprüche 17 bis 19 , bei dem das Objekt eine Sequenz von vorbestimmten Wegabschnitten abläuft, wobei die Reihenfolge der abgelaufenen Wegabschnitte mit Hilfe einer Kostenfunktion für jeden Wegabschnitt ermittelt wird.

**21.** Verfahren nach Anspruch 20 , bei dem die Kostenfunktion für eine jeweiligen Wegabschnitt angibt, wie groß der maximale Abstand einer Objektposition auf dem Wegabschnitt zur nächstgelegenen Basisstation (BS1, ..., BS14) oder zu einer bereits durchlaufenen nächstgelegenen Objektposition ist.

**22.** Verfahren nach einem die vorhergehenden Ansprüche, bei dem das merkmalsbasierte Ortungsverfahren ein feldstärkebasiertes Ortungsverfahren und/oder ein laufzeitbasiertes Ortungsverfahren und/oder winkelbasiertes Ortungsverfahren umfasst.

**23.** Verfahren nach Anspruch 22 , bei dem bei dem laufzeitbasierten Ortungsverfahren nur solche Felder berücksichtigt werden, welche eine Mindestsignalstärke am Objekt aufweisen.

**24.** Verfahren nach einem der vorhergehenden Ansprüche, bei dem das merkmalsbasierte Ortungsverfahren die Felder eines DECT- und/oder WLAN- und/oder Mobilfunk-Netzes zur Ortung nutzt.

**25.** Vorrichtung zur rechnergestützten Ortung eines mobilen Objekts mit Hilfe eines merkmalsbasierten Ortungsverfahrens, mit dem die Merkmale von mehreren Basisstationen (BS1, ...,BS14) gemessen werden und hieraus unter Verwendung einer Referenzkarte, RM, die Position des Objekts geortet wird, wobei das Merkmal einer Basisstation (BS1, ..., BS14) ein von der Basisstation (BS1, ..., BS14) ausgesendetes Feld am Objekt oder ein vom Objekt ausgesendetes Feld an der Basisstation (BS1, ..., BS14) charakterisiert, **dadurch gekennzeichnet, dass** die Vorrichtung wenigstens eine Antenne zum Empfang der Felder der Basisstationen (BS1, ..., BS14) und/oder zum Aussenden von Feldern zum Empfang durch die Basisstationen sowie eine Auswerteeinheit zur Auswertung der gemessenen Merkmale der Basisstationen (BS1, ..., BS14) umfasst, wobei die Auswerteeinheit derart ausgestaltet ist, dass mit der Auswerteeinheit ein Verfahren nach einem der vorhergehenden Ansprüche durchführbar ist, wobei zur Initialisierung des Verfahrens eine Referenzkarte, RM, mit einem Wellenausbreitungsmodell berechnet wird.

**Claims**

**1.** Method for determining the position of a mobile object in a computer-assisted manner by means of a feature-based position-finding method, by way of which the features of a plurality of base stations (BS1, ..., BS14) are measured and the position of the object is located herefrom using a reference map (RM), wherein the feature of a base station (BS1, ..., BS14) characterizes a field transmitted by the base station (BS1, ..., BS14) at the object or a field transmitted by the object at the base station (BS1, ..., BS14), **characterized in that** the method is accomplished with the following steps:

a) to initialize the method a reference map RM is calculated using a wave propagation model, said map comprising a plurality of support points which are each represented by a position $^{k}pos_{RM}$ and a feature-dependent value assigned to the position $^{k}pos_{RM}$;
b) during the operation of the method a plurality of position-finding processes is carried out by way of which, in each case, a measured feature-dependent value $^{c}p$ and from this a located position $pos_{RM}$ ($^{c}p$) of the object is determined via the feature-based position-finding method using the predetermined reference map RM calculated using the wave propagation model;
c) for at least part of the position-finding processes in each case one or several updates of the predetermined reference map RM calculated using the wave propagation method are effected, where the feature-dependent values $p_{RM}$ are corrected by a correction term $S_{UPU}$ at the support points of the reference map RM in a predetermined surrounding area around an object position $pos_{RM}$ ($^{c}p$), wherein the correction term $S_{UPU}$ depends on the difference between the measured feature-dependent value $^{c}p$ of the respective location and the feature-dependent value $^{k}p_{RM}$ at a support point in the predetermined surrounding area.

**2.** Method according to Claim 1, where the object position $pos_{RM}$ ($^{c}p$) is previously known or is the position located via the respective position-finding process.

**3.** Method according to Claim 1 or 2, where the step c) is carried out at the time of the respective position-finding process or after the accomplishment of a predetermined number of position-finding processes.

4. Method according to Claim 3, where the wave propagation model is a radial propagation model.

5. Method according to Claim 3, where the wave propagation method is a MWM propagation model, MWM = Multi Wall Model, or a DPM propagation model, DPM = Dominant Path Model.

6. Method according to one of Claims 3 to 5, where the parameters of the propagation model are determined at least partially by a self-measurement by the base stations (BS1, ..., BS14).

7. Method according to one of the preceding claims, where the majority of position-finding processes in step b) are carried out in each case by means of a finger-printing method and/or by means of a probabilistic method.

8. Method according to one of the preceding claims, where the size of the correction term $S_{UPD}$ decreases in magnitude as the distance from the object position $pos_{RM}$ ($^c$p) increases.

9. Method according to Claim 8, where the correction term $S_{UPD}$ depends on a Gaussian function f(r) with the centre in the object position $pos_{RM}$ ($^c$p).

10. Method according to Claim 9, where the predetermined area surrounding the object position $pos_{RM}$ ($^c$p) depends on the standard deviation $\delta$ of the Gaussian function f(r).

11. Method according to Claim 10, where the predetermined surrounding area is formed by a circle around the centre of the Gaussian function f (r) having a radius that is greater than or equal to the standard deviation $\delta$ and is, in particular, a multiple of, preferably three times the standard deviation $\delta$.

12. Method according to one of Claims 9 to 11, where the standard deviation $\delta$ of the Gaussian function f(r) depends on the spacing between the support points of the reference map RM and in particular lies between the support point spacing and five times the support point spacing.

13. Method according to one of Claims 9 to 12, where the Gaussian function f(r) is approximated by a function that decreases to zero as the distance from the centre increases and is zero, in particular at a value that is greater than or equal to the standard deviation $\delta$, preferably three times the standard deviation $\delta$.

14. Method according to one of the preceding claims, where the measured feature-dependent value $^c$p is a feature vector, in particular a field-strength vector, measured at the object or at the base stations at the time of the position-finding process, and where the predetermined reference map RM is a location feature map, where the feature-dependent values are feature vectors $^k p_{RM}$ for the positions $^k pos_{RM}$ of the support points, wherein a feature vector includes as entries the features of the base stations (BS1, ..., BS14) for the corresponding position.

15. Method according to Claim 14 in combination with one of Claims 8 to 13, where the correction term $S_{UPD}$ for a support point k inside the predetermined surrounding area is given by the following function or depends on the following function:

$$S_{UPD} = {}^k \Delta p \cdot f(r)$$

wherein f (r) is a Gaussian function defined as follows:

$$f(r) = \kappa \cdot e^{-\frac{1}{2}\left(\frac{r}{\sigma}\right)^2}$$

wherein $\delta$ is the standard deviation and r is the distance from the object position $pos_{RM}$ ($^c$p) and k is preferably a value less than 1 and particularly preferred less than or equal to 0.5,
wherein $^k\Delta p$ is a differential feature sector with one entry in each case for the feature of a base station of N base stations,
wherein the differential feature vector $^k\Delta p$ is either defined as:

$$^k\Delta p = {}^c p - {}^k p_{RM}$$

wherein $^c p$ is the measured feature vector at the time of the position-finding process and $^k p_{RM}$ is the feature vector at the support point k of the location field strength map.

16. Method according to Claim 15, where the path of the mobile object is predetermined and the object position $pos_{RM}$ ($^c p$) at the time of a respective position-finding process is a previously known position.

17. Method according to Claim 16, where the object moves on one or more predetermined path sections between, in each case, two base stations (BS1, ..., BS14), wherein object positions on the respective path section Q are known in advance and a position-finding process is carried out at each of said object positions.

18. Method according to Claim 17, where at the object position q - q = 1, ..., Q - of the Q object positions on a path section, the correction term $S_{UPD}$ (r, q) is defined as follows:

$$S_{UPD}(r,q) = \kappa \ ^q\Delta p \ \frac{e^{-\frac{1}{2}\left(\frac{qr}{\sigma}\right)^2}}{\sum\limits_{g=1}^{Q} e^{-\frac{1}{2}\left(\frac{qr}{\sigma}\right)^2} + \zeta}$$

wherein $\delta$ is the standard deviation and $^q r$ is the distance from the object position q and $^g r$ is the distance from the object position g and wherein k is preferably a value less than or equal to 0.5,
wherein $\zeta$ is a positive term that ensures that the denominator does not become zero, wherein $\zeta$ is preferably less than 1 and is, in particular, 0.3,
wherein $^q\Delta p$ is a differential feature vector having in each case one entry for the feature of one base station of N base stations,
wherein the difference feature vector $^q\Delta p$ is defined as:

$$^q\Delta p = {}^{cq} p - {}^{cq} p_{RM,}$$

wherein $^{cq} p$ is the measured feature vector at the time of the position-finding process at the object position q and $^{cq} p_{RM}$ is a feature vector determined with the location feature map RM at the located position.

19. Method according to Claim 18, where the distance $\Delta path_{(i+j)}$ between consecutive object positions on a predetermined path section is constant and the standard deviation $\delta$ depends on the constant distance $\Delta path_{(i+j)}$ and in particular is directly proportional to the constant distance $\Delta path_{(i+j)}$,

20. Method according to one of Claims 17 to 19, where the object executes a sequence of predetermined path sections, wherein the order of executed path sections is determined by means of a cost function for each path section.

21. Method according to Claim 20, where the cost function for a respective path section specifies how large the maximum distance is between one object position on the path section and the nearest base station (BS1, ..., BS14) or a nearest object position that has already been run through.

22. Method according to one of the preceding claims, where the feature-based position-finding method includes a field-strength-based position-finding method and/or a run-time-based position-finding method and/or an angle-based position-finding method.

23. Method according to Claim 22, where during the run-time-based position-finding method, only those fields that have a minimum signal strength at the object are taken into consideration.

24. Method according to one of the preceding claims, where the feature-based position-finding method utilizes the fields of a DECT and/or WLAN and/or mobile radio network for position finding.

25. Device for finding the position of a mobile object in a computer-assisted manner by means of a feature-based position-finding method, by way of which the features of a plurality of base stations (BS1, ..., BS14) are measured and the position of the object is located herefrom using a reference map RM, wherein the feature of one base station (BS1, ..., BS14) characterizes a field transmitted by the base station (BS1, ..., BS14) at the object or a field transmitted by the object at the base station (BS1, ..., BS14), **characterized in that** the device includes at least one antenna for receiving the fields of the base stations (BS1, ..., BS14) and/or for transmitting fields to be received by the base stations as well as an evaluating unit for evaluating the measured features of the base stations (BS1, ..., BS14), wherein the evaluating unit is developed in such a manner that by using the evaluating unit a method according to one of the preceding claims is accomplishable, wherein for initializing the method a reference map RM is calculated using a wave propagation model.

**Revendications**

1. Procédé pour la localisation assistée par ordinateur d'un objet mobile à l'aide d'un procédé de repérage basé sur des caractéristiques qui permet de mesurer les caractéristiques de plusieurs stations de base (BS1, ..., BS14), et à partir de celles-ci, en utilisant une carte de référence (RM), de repérer la position de l'objet, dans lequel la caractéristique d'une station de base (BS1, ..., BS14) caractérise un champ émis par la station de base (BS1, ..., BS14) au niveau de l'objet ou un champ émis par l'objet au niveau de la station de base (BS1, ..., BS14), **caractérisé en ce que** le procédé est exécuté par les étapes suivantes :

a) pour initialiser le procédé, on calcule par un modèle de propagation d'onde une carte de référence, RM, qui comprend une pluralité de points de données respectivement représentés par une position, $^k pos_{RM}$, et une valeur, $^k p_{RM}$, dépendant des caractéristiques et associée à la position, $^k pos_{RM}$ ;
b) en cours de fonctionnement du procédé, une pluralité de repérages est effectuée par lesquels on détermine respectivement une valeur dépendant des caractéristiques, $^c p$, mesurée, et à partir de celle-ci une position repérée, $pos_{RM}(^c p)$, de l'objet par l'intermédiaire du procédé de repérage basé sur des caractéristiques en utilisant la carte de référence, RM, prédéfinie, calculée par le modèle de propagation d'onde ;
c) pour au moins une partie des repérages, respectivement une ou plusieurs mises à jour de la carte de référence, RM, prédéfinie, calculée par le modèle de propagation d'onde, sont effectuées dans lesquelles les valeurs dépendant des caractéristiques, $^k p_{RM}$, sont corrigées au niveau des points de données de la carte de référence, RM, dans un environnement prédéterminé autour d'une position d'objet, $pos_{RM}(^c p)$, respectivement par un terme correctif, $S_{UPD}$, dans lequel le terme correctif, $S_{UPD}$, dépend de la différence entre la valeur dépendant des caractéristiques, $^c p$, mesurée du repérage respectif et de la valeur dépendant des caractéristiques, $^k p_{RM}$, au niveau d'un point de données dans l'environnement prédéterminé.

2. Procédé selon la revendication 1, dans lequel la position d'objet, $pos_{RM}(^c p)$, est connue à l'avance ou est la position repérée, déterminée par le repérage respectif.

3. Position selon la revendication 1 ou 2, dans lequel l'étape c) est effectuée au moment du repérage respectif ou après l'exécution d'un nombre prédéterminé de repérages.

4. Procédé selon la revendication 3, dans lequel le modèle de propagation d'onde est un modèle de propagation radial.

5. Procédé selon la revendication 3, dans lequel le modèle de propagation d'onde est un modèle de propagation MWM, MWM = "Multi Wall Model", ou un modèle de propagation DPM, DPM = "Dominant Path Model".

6. Procédé selon l'une quelconque des revendications 3 à 5, dans lequel les paramètres du modèle de propagation sont déterminés au moins en partie par une auto-mesure des stations de base (BS1, ..., BS14).

7. Procédé selon l'une quelconque des revendications précédentes, dans lequel la pluralité de repérages à l'étape b) est effectuée respectivement à l'aide d'un procédé de relevé d'empreintes et/ou à l'aide d'un procédé probabiliste.

8. Procédé selon l'une quelconque des revendications précédentes, dans lequel la grandeur du terme correctif, $S_{UPD}$, diminue en valeur au fur et à mesure que la distance par rapport à la position d'objet, $pos_{RM}(^c p)$ augmente.

9. Procédé selon la revendication 8, dans lequel le terme correctif, $S_{UPD}$, dépend d'une fonction gaussienne, $f(r)$, ayant son centre dans la position d'objet, $pos_{RM}(^c p)$.

10. Procédé selon la revendication 9, dans lequel l'environnement prédéterminé autour de la position d'objet, $pos_{RM}(^c p)$, dépend de l'écart-type, $\sigma$, de la fonction gaussienne, $f(r)$.

11. Procédé selon la revendication 10, dans lequel l'environnement prédéterminé est formé par un périmètre autour du centre de la fonction gaussienne, $f(r)$, avec un rayon qui est supérieur ou égal à l'écart-type, $\sigma$, et est en particulier un multiple, de préférence le triple, de l'écart-type, $\sigma$.

12. Procédé selon l'une quelconque des revendications 9 à 11, dans lequel l'écart-type, $\sigma$, de la fonction gaussienne, $f(r)$, dépend de la distance entre les points de données de la carte de référence, RM, et se situe en particulier entre la distance de point de données et un quintuple de la distance de point de données.

13. Procédé selon l'une quelconque des revendications 9 à 12, dans lequel la fonction gaussienne, $f(r)$, est approchée par une fonction qui diminue vers zéro, au fur et à mesure que la distance du centre augmente, et est en particulier égale à zéro pour une valeur supérieure ou égale à l'écart-type, $\sigma$, de préférence pour un triple de l'écart-type, $\sigma$.

14. Procédé selon l'une quelconque des revendications précédentes, dans lequel la valeur dépendant des caractéristiques, $^c p$, mesurée est un vecteur de caractéristique mesuré au niveau de l'objet ou des stations de base, en particulier un vecteur d'intensité de champ, au moment du repérage, et dans lequel la carte de référence, RM, prédéfinie est une carte des caractéristiques locales, dans laquelle les valeurs dépendant des caractéristiques sont des vecteurs de caractéristique, $^k p_{RM}$, pour les positions, $^k pos_{RM}$, des points de données, un vecteur de caractéristique comprenant comme entrées les caractéristiques des stations de base (BS1, ..., BS9) pour la position correspondante.

15. Procédé selon la revendication 14 en combinaison avec l'une quelconque des revendications 8 à 13, dans lequel le terme correctif $S_{UPD}$ pour un point de données k à l'intérieur de l'environnement prédéterminé est donné par la fonction suivante ou dépend de la fonction suivante :

$$S_{UPD} \;=\; k\Delta p \cdot f(r)$$

où $f(r)$ est une fonction gaussienne définie comme suit :

$$f(r) = \kappa \cdot e^{\frac{1}{2}\left(\frac{r}{\sigma}\right)^2} \; ,$$

où $\sigma$ est l'écart-type et r est la distance par rapport à la position d'objet, $pos_{RM}(^c p)$, et k est de préférence une valeur inférieure à 1 et de façon particulièrement préférée inférieure ou égale à 0,5,
où $^k \Delta p$ est un vecteur de caractéristique de différence avec respectivement une entrée pour la caractéristique d'une station de base parmi N stations de base,
où le vecteur de caractéristique de différence $^k \Delta p$ est soit défini par :

$$^k\Delta p \;=\; {}^c p \;-\; {}^c p_{RM},$$

où $^c p$ est le vecteur de caractéristique mesuré au moment du repérage et $^c p_{RM}$ est un vecteur de caractéristique déterminé par la carte des caractéristiques locales (RM) à la position repérée,
soit défini par :

$$^{k}\Delta p \;=\; ^{c}p \;-\; ^{k}p_{RM},$$

où $^{c}p$ est le vecteur de caractéristique mesuré au moment du repérage et $^{k}p_{RM}$ est le vecteur de caractéristique au point de données k de la carte d'intensité de champ locale.

16. Procédé selon la revendication 15, dans lequel le trajet de l'objet mobile est prédéfini et la position d'objet, $pos_{RM}(^{c}p)$, au moment d'un repérage respectif est une position connue à l'avance.

17. Procédé selon la revendication 16, dans lequel l'objet se déplace sur un ou plusieurs tronçons de trajet prédéterminés entre respectivement deux stations de base (BS1, ..., BS14), dans lequel, sur le tronçon de trajet respectif, Q positions d'objet sont connues à l'avance, et respectivement un repérage est effectué au niveau de ces positions d'objet.

18. Procédé selon la revendication 17, dans lequel à la position d'objet q ; q = 1, ..., Q ; parmi les Q positions d'objet sur un tronçon de trajet, le terme correctif $S_{UPD}(r,q)$ est défini comme suit :

$$S_{UPD}(r,q) = \kappa \; ^{q}\Delta p \; \frac{e^{-\frac{1}{2}(\frac{^{q}r}{\sigma})^{2}}}{\sum_{g=1}^{Q} e^{-\frac{1}{2}(\frac{^{r}r}{\sigma})^{2}} + \zeta}$$

où σ est l'écart-type et $^{q}r$ est la distance par rapport à la position d'objet q et $^{g}r$ est la distance par rapport à la position d'objet g, et où k est de préférence une valeur inférieure ou égale à 0,5,
où ζ est un terme positif qui assure que le dénominateur ne passe pas à zéro, où ζ est de préférence inférieur à 1 et est en particulier égal à 0,3,
où $^{q}\Delta p$ est un vecteur de caractéristique de différence avec respectivement une entrée pour la caractéristique d'une station de base parmi N stations de base,
où le vecteur de caractéristique de différence $^{q}\Delta p$ est défini comme :

$$^{q}\Delta p \;=\; ^{cq}p \;-\; ^{cq}p_{RM},$$

où $^{cq}p$ est le vecteur de caractéristique mesuré au moment du repérage à la position d'objet q, et $^{cq}p_{RM}$ est un vecteur de caractéristique déterminé par la carte de caractéristiques locales, RM, à la position repérée.

19. Procédé selon la revendication 18, dans lequel la distance, $\Delta path_{(i,j)}$, entre des positions d'objet consécutives sur un tronçon de trajet prédéterminé est constante, et l'écart-type, σ, dépend de la distance constante, $\Delta path_{(i,j)}$, et est en particulier directement proportionnel à la distance constante, $\Delta path_{(i,j)}$.

20. Procédé selon l'une quelconque des revendications 17 à 19, dans lequel l'objet parcourt une séquence de tronçons de trajet prédéterminés, dans lequel l'ordre des tronçons de trajet parcourus est déterminé à l'aide d'une fonction de coût pour chaque tronçon de trajet.

21. Procédé selon la revendication 20, dans lequel la fonction de coût indique pour un tronçon de trajet respectif la grandeur de la distance maximale d'une position d'objet sur le tronçon de trajet jusqu'à la station de base (BS1, ..., BS14) la plus proche ou jusqu'à une position d'objet la plus proche, déjà parcourue.

22. Procédé selon l'une quelconque des revendications précédentes, dans lequel le procédé de repérage basé sur des caractéristiques comprend un procédé de repérage basé sur l'intensité de champ et/ou un procédé de repérage basé sur le temps de propagation et/ou un procédé de repérage basé sur des angles.

**23.** Procédé selon la revendication 22, dans lequel dans le procédé de repérage basé sur le temps de propagation, sont prises en considération seules les erreurs qui présentent une intensité de signal minimale au niveau de l'objet.

**24.** Procédé selon l'une quelconque des revendications précédentes, dans lequel le procédé de repérage basé sur des caractéristiques exploite les champs d'un réseau DECT et/ou d'un réseau WLAN et/ou d'un réseau de téléphonie mobile pour le repérage.

**25.** Dispositif pour la localisation assistée par ordinateur d'un objet mobile à l'aide d'un procédé de repérage basé sur des caractéristiques qui permet de mesurer les caractéristiques de plusieurs stations de base (BS1, ..., BS14), et à partir de celles-ci, en utilisant une carte de référence (RM), de repérer la position de l'objet, dans lequel la caractéristique d'une station de base (BS1, ..., BS14) caractérise un champ émis par la station de base (BS1, ..., BS14) au niveau de l'objet ou un champ émis par l'objet au niveau de la station de base (BS1, ..., BS14), **caractérisé en ce que** le dispositif comprend au moins une antenne pour recevoir les champs des stations de base (BS1, ..., BS14) et/ou pour émettre des champs à recevoir par les stations de base, ainsi qu'une unité d'évaluation pour évaluer les caractéristiques mesurées des stations de base (BS1, ..., BS14), dans lequel l'unité d'évaluation est configurée de telle sorte que l'unité d'évaluation permet d'exécuter un procédé selon l'une quelconque des revendications précédentes, dans lequel pour initialiser le procédé, une carte de référence, RM, est calculée par un modèle de propagation d'onde.

## FIG 1

FIG 2

EP 2 002 680 B1

FIG 3

FIG 4

FIG 5

EP 2 002 680 B1

# FIG 6

FIG 7

EP 2 002 680 B1

FIG 8

FIG 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6259406 B1

**In der Beschreibung aufgeführte Nicht-Patentliteratur**

- **T. S. Rappaport.** Wireless Communications Principles und Practice. Prentice Hall Inc, 2002
- **T. Kohonen.** The self-organizing map. *Proceedings of the IEEE,* September 1990, vol. 78 (9), 1464-1480
- **M. Schlang ; M. Haft ; K. A. Fuchs.** A comparison of RBF and MLP networks for reconstruction of focal events from bioelectric/biomagnetic field patterns. *Mustererkennung 1994 Erkennen und Lernen, 16. DAGM Symposium und 18. Workshop of the ÖAGM,* 1994
- **G. Wölfle ; R. Wahl ; P. Wertz ; P. Wildbolz ; F. Landstorfer.** Dominant path prediction model for indoor scenarios. *German Microwave Conference (GeMIC) 2005,* April 2005
- **G. Wölfle ; F. Landstorfer.** Dominant paths for the field strength prediction. *48th IEEE Vehicular Technology Conference (VTC) 1998,* Mai 1998, 552-556
- **H. Wang.** Fusion of Information Sources for Indoor Positioning with Field Strength Measurements. *Master Thesis,* 2005
- **M. Shimrat.** Algorithm 112: position of point relative to polygon. *Communications of the ACM,* August 1962, vol. 5 (8), 434
- **Robert W. Floyd.** Algorithm 97: shortest path. *Communications of the ACM,* 1962, vol. 5 (6), 345